(19) Europäisches Patentamt
European Patent Office
Office européen des brevets

(11) **EP 4 383 637 A1**

(12) **EUROPEAN PATENT APPLICATION**

(43) Date of publication:
**12.06.2024 Bulletin 2024/24**

(21) Application number: **23213688.7**

(22) Date of filing: **01.12.2023**

(51) International Patent Classification (IPC):
**H04L 5/00** (2006.01)  **H04W 84/00** (2009.01)
**H04W 72/23** (2023.01)  **H04W 84/12** (2009.01)

(52) Cooperative Patent Classification (CPC):
**H04L 5/0053; H04W 72/23; H04W 84/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.12.2022 US 202263385638 P**

(71) Applicant: **Comcast Cable Communications, LLC
Philadelphia, PA 19103 (US)**

(72) Inventors:
• **LANANTE, Leonardo Alisasis
Philadelphia, 19103 (US)**
• **KIM, Jeongki
Philadelphia, 19103 (US)**
• **DINAN, Esmael Hejazi
Philadelphia, 19103 (US)**

(74) Representative: **V.O.
P.O. Box 87930
2508 DH Den Haag (NL)**

(54) **CHANNEL RESERVATION FOR PACKET TRANSMISSION**

(57)     An access point may communicate with one or more computing devices. A downlink frame may indicate that computing device is to switch to a different channel for communicating with the access point. The access point may request a response to confirm receipt of the downlink frame.

**FIG. 1**

EP 4 383 637 A1

STA 1304: CH1, Max BW =160
STA 1306: CH2, Max BW = 240
STA 1308: CH3, Max BW = 160

1300

AP 1302

| TF+DLA |
| TF+DLA |
| TF+DLA |
| TF+DLA |

1310

1316

| PPDU (STA 1304) 1318 |
| PPDU (STA 1306) 1320 |

STA 1304

TB PPDU 1312

STA 1306

TB PPDU 1314

STA 1308

**FIG. 13**

2

**Description**

CROSS-REFERENCE TO RELATED APPLICATIONS

This application claims the benefit of U.S. Provisional Application No. 63/385,638, filed on December 1, 2022. The above referenced application is hereby incorporated by reference in its entirety.

BACKGROUND

An access point communicates with stations. Data units are communicated between the access point and stations.

SUMMARY

The following summary presents a simplified summary of certain features. The summary is not an extensive overview and is not intended to identify key or critical elements.

An access point may communicate with one or more computing devices, such as stations. A downlink frame may be sent, from the access point, to the one or more computing devices. The downlink frame may inform that a computing device is to switch to a different channel for receiving a data unit. The computing device may need to receive the downlink frame, for example, in order to receive/decode the data unit via the different channel. To improve communications between the access point and the computing device, the access point may request a response from the computing device to confirm receipt of the downlink frame.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows example wireless communication networks.

FIG. 2 shows example devices in a communication network.

FIG. 3 shows an example format of a Medium Access Control (MAC) frame.

FIG. 4 shows an example of a Quality of Service (QoS) null frame indicating buffer status information.

FIG. 5 shows an example trigger frame format.

FIG. 6 shows an example aggregated physical layer protocol data unit (A-PPDU).

FIG. 7 shows an example A-PPDU transmission procedure.

FIG. 8 shows an example Extremely High Throughput (EHT) PPDU.

FIG. 9 shows an example Ultra High Reliability (UHR) PPDU.

FIG. 10 shows an example multi-user (MU) PPDU transmission procedure.

FIG. 11 shows an example MU PDDU.

FIG. 12 shows an example problem of an A-PPDU transmission procedure.

FIG. 13 shows an example of a first A-PPDU transmission procedure.

FIG. 14 shows an example of a second A-PPDU transmission procedure.

FIG. 15 shows an example of a third A-PPDU transmission procedure.

FIG. 16 shows an example of a third A-PPDU transmission procedure.

FIG. 17 shows an example frame for a first A-PPDU transmission procedure.

FIG. 18 shows an example Common Info field for a second A-PPDU transmission procedure.

FIG. 19 shows an example frame for a third A-PPDU transmission procedure.

FIG. 20 shows an example process for an access point.

FIG. 21 shows an example process for a station.

FIG. 22 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

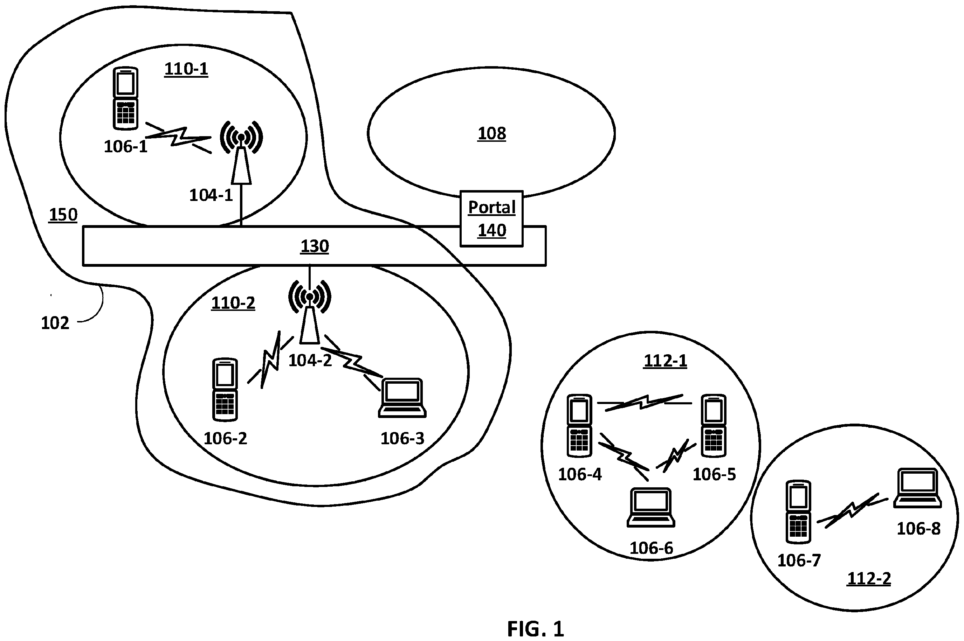

FIG. 1 shows example wireless communication networks. The example wireless communication networks may be a wireless local area network (WLAN) 102. The WLAN 102 may comprise an Institute of Electrical and Electronic Engineers (IEEE) 802.11 infrastructure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY (physical layer) preamble and a payload in the form of a physical layer convergence protocol (PLCP) service data unit (PSDU). For example, the PSDU may comprise a PHY header and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

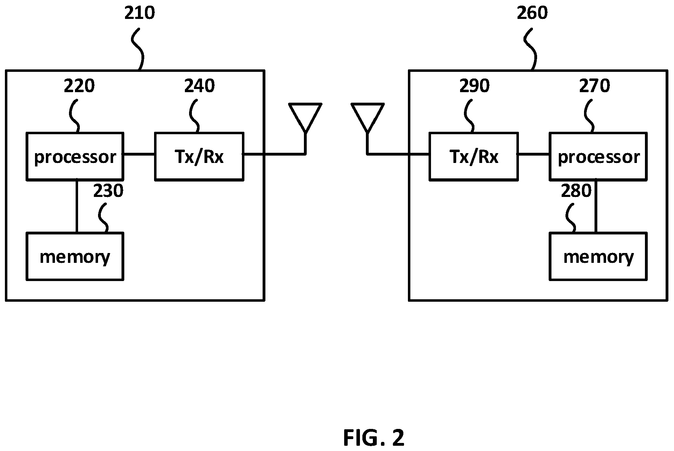

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3rd generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

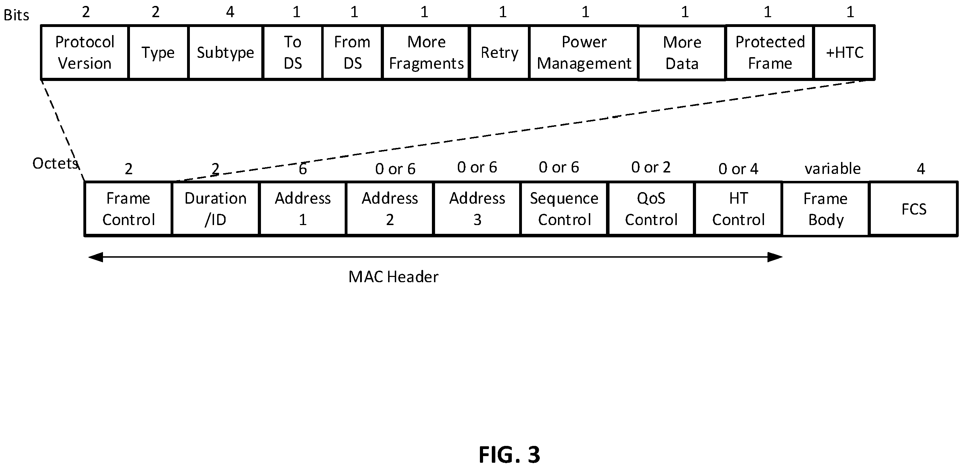

FIG. 3 shows an example format of a MAC frame. In operation, a STA may construct a subset of MAC frames for transmission and may decode a subset of received MAC frames upon validation. The particular subsets of frames that a STA may construct and/or decode may be determined by the functions supported by the STA. A STA may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional quality of service (QoS) control field, and an optional high throughput (HT) control field.

The frame control fields may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving STA may use this indication to aid in the process of eliminating duplicate frames. These rules may not apply for frames sent by a STA under a block agreement. The power management subfield may be used to indicate the power management mode of a STA.

The More Data subfield may indicate to a STA in power save (PS) mode that bufferable units (Bus) are buffered for that STA at the AP. The more data subfield may be valid in individually addressed data or management frames sent (e.g., transmitted) by an AP to a STA in PS mode. The more data subfield may be set to 1 to indicate that at least one additional buffered BU is present for the STA.

The protected frame subfield may be set to 1, for example, if the frame body field contains information that has been processed by a cryptographic encapsulation algorithm. The +HTC subfield may indicate that the MAC frame contains a high throughput (HT) control field.

The duration/ID field of the MAC header may indicate various contents depending on frame type and subtype and the QoS capabilities of the sending STA. For example, in control frames of the power save poll (PS-Poll) subtype, the duration/ID field may carry an association identifier (AID) of the STA that sent (e.g., transmitted) the frame in the 14 least significant bits (LSB), and the two most significant bits (MSB) may be both set to 1. In other frames sent by STAs, the duration/ID field may contain a duration value (in microseconds) which may be used by a recipient to update a network allocation vector (NAV). The NAV may be a counter that indicates to a STA an amount of time during which the STA must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) STA. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

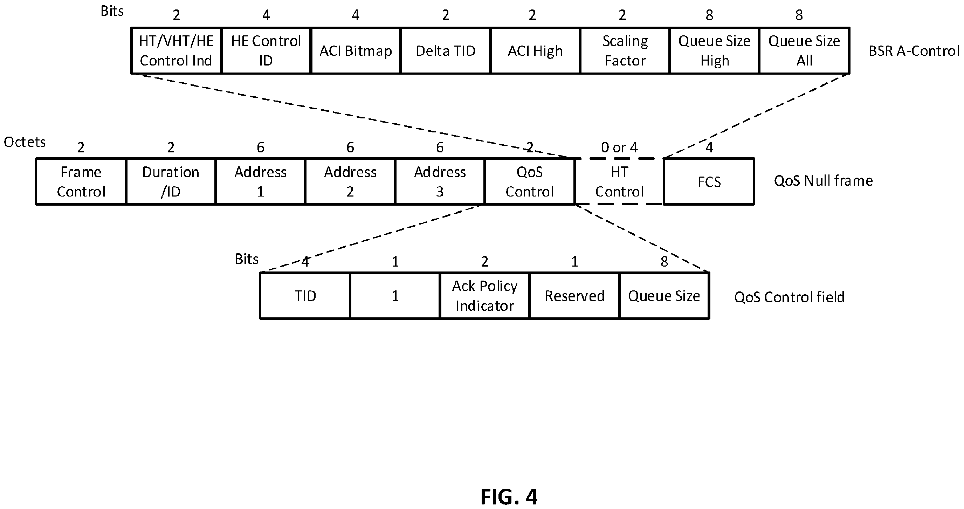

FIG. 4 shows an example of a QoS null frame indicating buffer status information. A QoS null frame refers to a QoS data frame with an empty frame body. A QoS null frame may comprise a QoS control field and an optional HT control field which may contain a buffer status report (BSR) control subfield. A QoS null frame indicating buffer status information may be sent (e.g., transmitted) by a STA to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the STA for transmission to the AP identified by the receiver address of the frame containing the subfield. The queue size subfield may be present in QoS null frames sent by a STA, for example, if bit 4 of the QoS control field is set to 1. The AP may use information contained in the queue size subfield to determine the TXOP (transmission opportunity) duration assigned to the STA or to determine the uplink (UL) resources assigned to the STA.

In a frame sent by or to a non-High Efficiency (non-HE) STA, the following rules may apply to the queue size value:

- The queue size value is the approximate total size, rounded up to the nearest multiple of 256 octets and expressed in units of 256 octets, of all MSDUs and A-MSDUs buffered at the STA (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE STA to an HE AP, the following rules may apply to the queue size value:

- The queue size value, $QS$, is the approximate total size in octets, of all MSDUs and A-MSDUs buffered at the STA (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B15 of the QoS control field and an unscaled value, $UV$, in bits B8-B13 of the QoS control field. The scaling factor subfield provides the scaling factor, $on$.

A STA may obtain the queue size, $QS$, from a received QoS control field, which contains a scaling factor, $SF$, and an unscaled value, $UV$, as follows:

$$QS = \begin{cases} 16 \times UV, & \text{if } SF \text{ is equal to 0;} \\ 1024 + 256 \times UV, & \text{if } SF \text{ is equal to 1;} \\ 17408 + 2048 \times UV, & \text{if } SF \text{ is equal to 2;} \\ 148480 + 32768 \times UV, & \text{if } SF \text{ is equal to 3 and } UV \text{ is less than 62;} \\ > 2147328, & \text{if } SF \text{ equal to is 3 and } UV \text{ is equal to 62;} \\ Unspecified \text{ or } Unknown, & \text{if } SF \text{ is equal to 3 and } UV \text{ is equal to 63}. \end{cases}$$

The TXOP duration requested subfield, which may be included instead of the queue size subfield, may indicate the duration, in units of 32 microseconds (us), that the sending STA determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for uplink (LTL) multi-user (MU) operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the STA is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC_BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the STA identified by the receiver address of the frame containing the BSR control subfield. The queue size all subfield may indicate the amount of buffered traffic, in units of SF octets, for all Acs identified by the ACI Bitmap subfield, that is intended for the STA identified by the receiver address of the frame containing the BSR control subfield.

The queue size values in the queue size high and queue size all subfields are the total sizes, rounded up to the nearest multiple of SF octets, of all MSDUs and A-MSDUs buffered at the STA (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than $254 \times$ SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

In at least some technologies, procedures for setting up a multi-AP transmission may result in situations of unsuccessful communication between a participating AP of the multi-AP transmission and one or more associated STAs. Such situations not only may cause resources shared for the multi-AP transmission to be lost but also may cause the QoS requirements of certain traffic types to be missed in the multi-AP group. Traffic types that may be particularly impacted include traffic types in which a PPDU contains one or more payloads intended for multiple users, such as broadcast traffic (single data payload intended for all users), multicast traffic (single data payload intended for multiple users), or multi-user unicast traffic (multiple payloads each intended to a respective user).

For example, a plurality of APs such as AP1, AP2, and AP3 may be part of a multi-AP group. One or more of AP1, AP2, and/or AP3 (e.g., each of AP1, AP2, and AP3) may have one or more associated STAs. The available frequency resources of the multi-AP group may be divided into a first frequency channel (CH1) and a second frequency channel (CH2). CH1 and CH2 may be non-overlapping channels. Both AP1 and AP2 may have the second frequency channel (CH2) as a primary channel.

AP1 may be the first AP (e.g., master AP) of the multi-AP group comprising AP1, AP2, AP3. For example, AP1 may obtain a TXOP making it the first AP of the multi-AP group. Also or alternatively, AP1 may be designated as the first AP by an AP controller. AP1 may decide that an upcoming TXOP shall be shared by multiple APs of the multi-AP group. The upcoming TXOP may be a TXOP obtained by AP1 or by another AP. AP1 may wish to share an obtained TXOP with AP2 and AP3. By sharing the TXOP with AP2 and AP3, AP1 may allocate a portion of the TXOP to AP2 and AP3. AP2 and AP3 may perform a multi-AP transmission during the allocated portion of the TXOP. The multi-AP transmission may or may not include a transmission by AP1.

To assign frequency channels for the allocated portion of the TXOP, AP1 may send (e.g., transmit) an MBSRP frame on both the first and second channels (CH1) and (CH2). MBSRP frame may poll receiving APs for buffer status for a multi-AP transmission during the allocated portion of the TXOP. An AP that wishes to participate in the planned multi-AP transmission may respond to MBSRP frame by sending (e.g., transmitting) a MBSR frame to AP1. The MBSR frame may include a BSR for traffic intended to be transmitted by the AP during the multi-AP transmission. The MBSR frame may include an indication of whether the AP intends to send (e.g., transmit) to multiple users during the multi-AP transmission. The MBSR frame may indicate whether the traffic intended for transmission during the multi-AP transmission includes broadcast traffic, multicast traffic, and/or multi-user unicast traffic.

The indication in the MBSR frame indicates whether any type of multi-user traffic is intended for transmission during the multi-AP transmission. For example, the MBSR frame may include a field that indicates whether a PPDU intended for transmission during the multi-AP transmission is a Multiple Receiver PPDU (MRP). The specific type of multi-user traffic (e.g., broadcast, multicast, multi-user unicast) may be indicated in the MBSR frame.

AP2 and AP3 may respond to the MBSRP frame by sending (e.g., transmitting) an MBSR frame each. To indicate its intent to send (e.g., transmit) to multiple users during the multi-AP transmission, AP2 may set a MRP field of its MBSR frame to 1. AP3 may set the MRP field of its MBSR frame to 0 to indicate its intent to send (e.g., transmit) a single user PPDU during the multi-AP transmission. The MBSRP frame may indicate the channels on which AP2 and AP3 shall respond to the MBSRP frame. AP2 may send (e.g., transmit) its MBSR frame on the first channel (CH1), and AP3 may send (e.g., transmit) its MBSR frame on the second channel (CH2).

AP1 may determine an assignment of frequency channel to participating APs of the planned multi-AP transmission, for example, based on receiving MBSR frames from AP2 and AP3, respectively. AP1 may determine the assignment based on the values of the MRP fields indicated in MBSR frames from AP2 and AP3, respectively. AP1 may assign AP2 its primary channel (CH2) for the multi-AP transmission based on the MRP field of its frame being set 1. AP1 may assign AP3 the first channel (CH1) (a secondary channel for AP3) for the multi-AP transmission based on the MRP field of its frame being set to 0. AP1 may receive a frame from AP1/AP2 including an indication of a primary channel. The indication of primary channel may be included in the MBSR frames from AP2 and AP3, respectively. AP1 may assume a default channel as a primary channel for an AP from which it does not receive an indication of a primary channel.

AP1 may send (e.g., transmit) an MSA frame including the frequency channel assignment on both the first and second channels (CH1) and (CH2). AP2 and AP3 may broadcast the frequency channel assignment to their associated STAs by re-sending (e.g., re-transmitting) the frequency channel assignment in MSA frames, respectively, for example, based on receiving the MSA frame from AP1. AP2 and AP3 may send (e.g., transmit) MSA frames respectively on both the first and second frequency channels (CH1) and (CH2), for example, in order to prevent OBSS STAs surrounding AP2 and AP3 on both CH1 and CH2 from accessing the channel.

Improvements described herein may provide enhanced procedures which may be used to set up a multi-AP transmission. The procedures may mitigate the situations of unsuccessful communication. The proposed procedures may reduce such situations particularly for multi-user traffic types. As such, resource utilization and QoS performance may be improved within the multi-AP group.

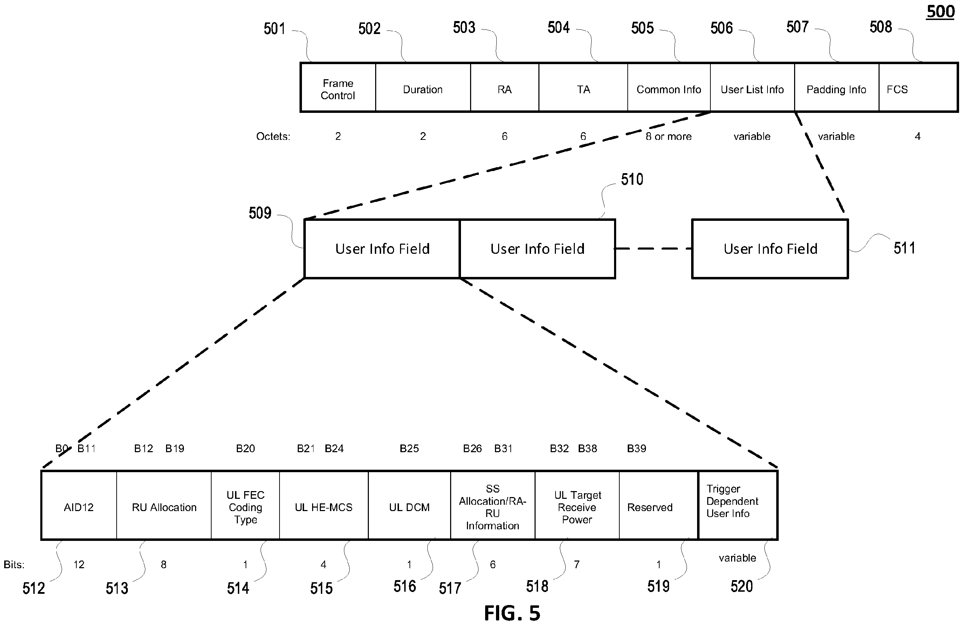

FIG. 5 shows an example trigger frame format. For example, a trigger frame 500 may correspond to a basic trigger frame that may be defined in an IEEE 802.11ax standard amendment. The trigger frame 500 may be used by an AP (not shown in FIG. 5) to allocate resources for and/or solicit one or more TB PPDU transmissions from one or more STAs. The trigger frame 500 may also carry other information that may be required by a responding STA to send (e.g., transmit) a TB PPDU to the AP. The trigger frame 500 may contain a Frame Control field 501, a Duration field 502, a receiver address (RA) field 503, a transmitter address (TA) field 504, a Common Info field 505, a User List Info field 506, a Padding field 507, and/or an FCS field 508.

The Frame Control field 501 may contain the following subfields: protocol version, type, subtype, To DS, From DS, more fragments, retry, power management, more data, protected frame, and/or +HTC. The Duration field 502 may indicate various contents, for example, depending on frame type, subtype, and/or the QoS capabilities of the responding (e.g., sending) STA. For example, in control frames of the power save poll (PS-Poll) subtype, the Duration field 502 may carry an association identifier (AID) of the responding (e.g., sending) STA that sent (e.g., transmitted) the frame in the 14 least significant bits (LSB), and the 2 most significant bits (MSB) may be both set to 1. In other frames sent by STAs, the Duration field 502 may contain a duration value (in microseconds) which may be used by a recipient to update a network allocation vector (NAV).

The RA field 503 may be an address of the STA that may be intended to receive the incoming transmission from a sending (e.g., transmitting) STA. The TA field 504 may be an address of the STA sending (e.g., transmitting) trigger frame 500, for example, if the trigger frame 500 may be addressed to STAs that may belong to a single BSS. The TA field 504 may be the sent (e.g., transmitted) BSSID, for example, if the trigger frame 500 may be addressed to STAs from at least two different BSSs of the multiple BSSID set.

The Common Info field 505 may specify a trigger frame type of the trigger frame 500, a transmit power (e.g., in dBm) of the trigger frame 500, and/or several key parameters of a TB PPDU that may be transmitted by a STA, based on (e.g., in response to) the trigger frame 500. The trigger frame type of a trigger frame used by an AP to receive QoS data using UL MU operation may be referred to as a basic trigger frame.

The User List Info field 506 may contain a User Info field per STA 509 that may be addressed in the trigger frame 500. The per STA User Info field 509 may contain, for example, among others, an AID subfield 512, an RU Allocation subfield 513, a Spatial Stream (SS) Allocation subfield 517, an MCS subfield 515 that may be used by a STA in a TB PPDU transmitted based on (e.g., in response to) the trigger frame 500, and/or a Trigger Dependent User Info subfield 520. The Trigger Dependent User Info subfield 520 may be used by an AP to specify a preferred access category (AC) per STA. The preferred AC may set the minimum priority AC traffic that may be sent by a participating STA. The AP may determine a list of participating STAs, along with the BW, MCS, RU allocation, SS allocation, Tx power, preferred AC, and/or maximum duration of the TB PPDU per participating STA.

The Padding field 507 may be optionally present in the trigger frame 500, for example, to extend the frame length to give recipient STAs enough time to prepare a response for transmission one SIFS, for example, if the frame may be received. The Padding field 507, for example, if present, may be at least two octets in length and/or may be set to all 1s. The FCS field 508 may be used by a STA, for example, to validate a received frame and/or to interpret certain fields from the MAC headers of a frame.

Extremely High Throughput (EHT) Wi-Fi systems and beyond (e.g., Ultra High Reliability (UHR) are expected to support BSS operation with a bandwidth of up to 320 MHz. However, many client STAs that operate with bandwidths lower than 320 MHz (e.g., 20/80/160 MHz) are expected to be in existence when such future Wi-Fi systems are introduced in the market.

To enhance utilization of the 320 MHz system bandwidth in the presence of heterogeneous devices (devices with different bandwidth support capabilities), an aggregated physical layer protocol data unit (A-PPDU) may be used for downlink and/or uplink transmission.

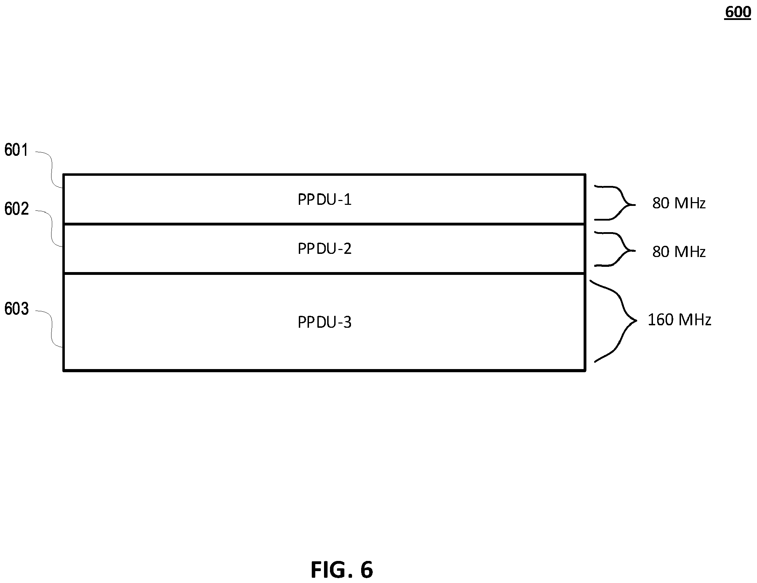

FIG. 6 shows an example A-PPDU. As described with respect to FIG. 6, an A-PPDU 600 may have a bandwidth of 320 MHz and/or may contain a plurality of PPDUs (e.g., a PPDU-1 601, a PPDU-2 602, and/or a PPDU-3 603). For example, the PPDU-1 601 may occupy a first 80 MHz portion or any other value of the A-PPDU 600. The PPDU-2 602 may occupy a second 80 MHz portion or any other value of the A-PPDU 600. The PPDU-3 603 may occupy a third 160 MHz portion or any other value of the A-PPDU 600. The first, second, and third portions may be non-overlapping in the frequency domain. The PDDU-1 601, the PPDU-2 602, and the PPDU-3 603 may have same or different PPDU formats. For example, the PPDU-1 601 may be a UHR PPDU, the PPDU-2 602 may be an EHT PPDU, and the PPDU-3 603 may be an HE PPDU.

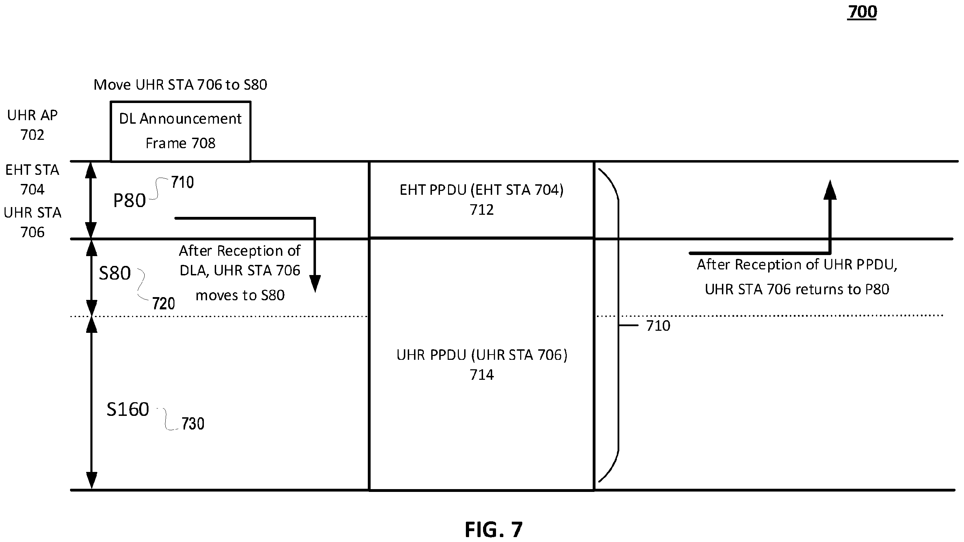

FIG. 7 shows an example A-PPDU transmission procedure. For example, a UHR AP 702 may support a bandwidth of up to 320 MHz or any other value. An EHT STA 704 may support a bandwidth of up to 160 MHz or any other value. A UHR STA 706 may support a bandwidth of up to 320 MHz or any other value. For example, the EHT STA 704 may be configured, without limitation, with a primary 80 MHz channel (e.g., a P80 710) and/or a secondary 80 MHz channel (e.g., a S80 720). The UHR STA 706 may be configured, without limitation, with the P80 710, the S80 720 (as a first secondary 80 MHz), a primary 160 MHz channel (not shown in FIG. 7), and/or a secondary 160 MHz channel (e.g., a S160 730).

The EHT STA 704 and/or the UHR STA 706 may be initially configured for communication on (e.g., parked on) the P80 710. The UHR AP 702 may send (e.g., transmit) a downlink (DL) announcement frame 708, for example, before sending (e.g., transmitting) an A-PPDU. The DL announcement frame 708 may be sent (e.g., transmitted) on a primary 20 MHz that may be located within the P80 710. The DL announcement frame 708 may be duplicated on one or more non-primary 20 MHz channels that may be located within the P80 710. The DL announcement frame 708 may request that the UHR STA 706 move to the S80 720 for an upcoming A-PPDU transmission.

Based on receiving the DL announcement frame 708, the UHR STA 706 may move to the S80 720. The DL announcement frame 708 may be transparent to the EHT STA 704. For example, the EHT STA 704 may not decode the DL announcement frame 708 and/or may not be aware of the upcoming A-PPDU transmission. The EHT STA 704 may remain configured for communication on (e.g., parked on) the P80 70.

The UHR AP 702 may send (e.g., transmit) the A-PPDU that may comprise an EHT PPDU 712 for the EHT STA 704 and/or a UHR PPDU 714 for the UHR STA 706. The EHT PPDU 712 may have an 80 MHz bandwidth and/or may be sent (e.g., transmitted) over the P80 710. The UHR PPDU 714 may have a 240 MHz bandwidth and/or may be sent (e.g., transmitted) over an aggregate channel of the S80 720 and the S160 730. The UHR STA 704 may return to the P80 710, for example, based on receiving the UHR PPDU 714.

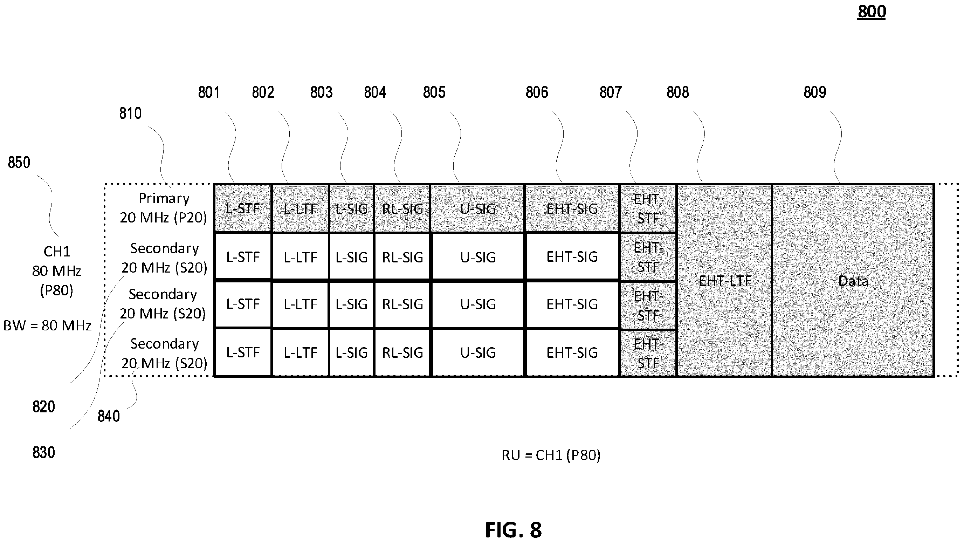

FIG. 8 shows an example EHT PPDU. As shown in FIG. 8, a portion of a PHY (physical layer) header of an EHT PPDU 800 may be duplicated over every 20 MHz channel located within an 80 MHz channel CH1 (e.g., a P80 850). The CH1 may correspond to a P80 850 and/or may include a P20 810 and the three successive S20 channels (e.g., an S20 820, an S20 830, and an S20 840). The duplicated PHY header portion may include a legacy Short Training Field (L-STF) 801, a legacy Long Training Field (L-LTF) 802, a legacy Signal field (L-SIG) 803, a repeated L-SIG (RL-SIG) 804, a Universal Signal Field (U-SIG) 805, an EHT Signal field (EHT-SIG) 806, and/or an EHT Short Training field (EHT-STF) 807. A non-duplicated portion of the PHY header may include an EHT Long Training field (EHT-LTF) 808, which may be sent (e.g., transmitted), as well as a data field 809, over the entire 80 MHz bandwidth of the EHT PPDU 800.

An EHT STA (e.g., such as EHT STA 704) may decode the grey shaded fields of the EHT PPDU 800 as described with respect to FIG. 8, for example, to decode the EHT PPDU 800. For example, the EHT STA may decode the L-STF 801, the L-LTF 802, the L-SIG 803, the RL-SIG 804, the U-SIG 805, and/or the EHT-SIG 806 that may be sent (e.g., transmitted) over the P20 810, the EHT-STF that may be sent (e.g., transmitted) over each of the P20 810 and the three S20 channels (e.g., the S20 820, the S20 830, and the S20 840), the EHT-LTF 808, and/or the data field 809. The EHT STA may determine (e.g., learn) the total bandwidth of the EHT PPDU 800 (e.g., 80 MHz) from the U-SIG 805. The EHT STA may determine (e.g., learn) the Resource Unit (RU) that may be allocated to it (CH1 = the P80 850) in the EHT PPDU 800 from the EHT-SIG 806. Based on the RU allocation, the EHT STA may determine (e.g., know) that it may decode the EHT-STF 807 that may be sent (e.g., transmitted) over each of the P20 810 and the three S20 channels (e.g., the S20 820, the S20 830, and the S20 840) within the P80 850 and the EHT-LTF over the entire 80 MHz bandwidth (e.g., the P80 850), for example, before being able to decode the data field 809 over the entire 80 MHz bandwidth (e.g., the P80 850) of the EHT PPDU 800.

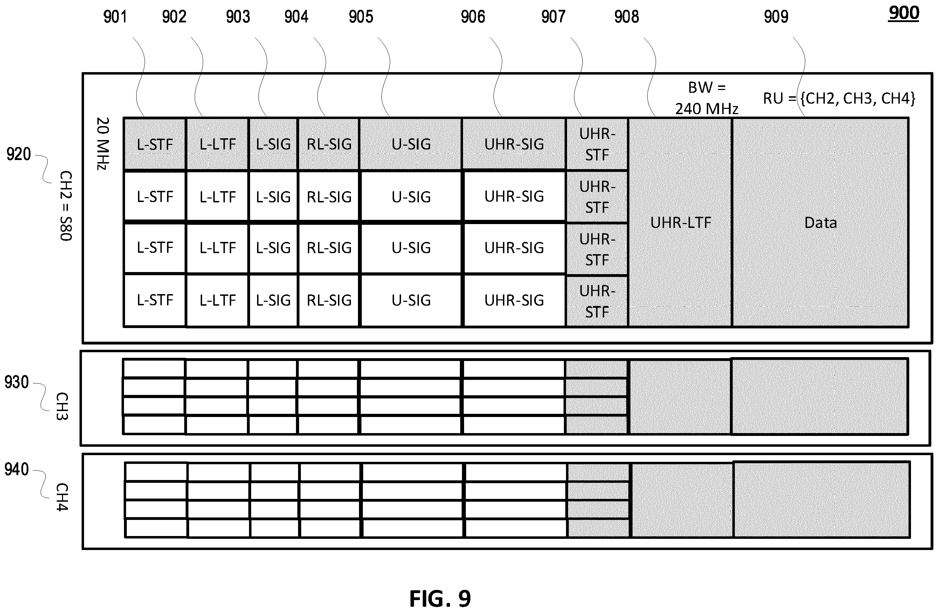

FIG. 9 shows an example UHR PPDU. As shown in FIG. 9, a portion of a PHY header of a UHR PPDU 900 may be duplicated over every 20 MHz channel located within 80 MHz channels (e.g., a CH2 920, a CH3 930, and a CH4 940). The CH2 920 may correspond to first secondary 80 MHz channel (e.g., S80). The CH3 930 may correspond to a second secondary 80 MHz channel. The CH4 940 may correspond to a third secondary 80 MHz channel. The duplicated PHY portion may contain an L-STF 901, an L-LTF 902, an L-SIG 903, an RL-SIG 904, a U-SIG 905, a UHR Signal field (UHR-SIG) 906, and a UHR Short Training field (UHR-STF) 907. A non-duplicated portion of the PHY header may contain a UHR Long Training field (UHR-LTF) 908, which may be sent (e.g., transmitted), as well as a data field 909, over the entire 240 MHz bandwidth of the UHR PPDU 900.

A UHR STA may decode the grey shaded fields of the UHR PPDU 900, for example, to decode the UHR PPDU 900. For example, the UHR STA may decode the L-STF 901, the L-LTF 902, the L-SIG 903, the RL-SIG 904, the U-SIG 905, and/or the UHR-SIG 906 that may be sent (e.g., transmitted) over a first 20 MHz channel within the CH2 920, the UHR-STF 907 that may be sent (e.g., transmitted) over every 20 MHz channel of the CH2 920, the CH3 930, and/or the CH4 940, the UHR-LTF 902, and/or the data field 909. The UHR STA may determine (e.g., learn) the total bandwidth of the UHR PPDU 900 (e.g., 240 MHz) from the U-SIG 905. The UHR STA may determine (e.g., learn) the RU that may be allocated to it (CH2, CH3, and CH4) in the UHR PPDU 900 from the UHR-SIG 906. Based on the RU allocation, the UHR STA may determine (e.g., know) that it may decode the UHR-STF 907 that may be sent (e.g., transmitted) over every 20 MHz channel of CH2, CH3, and/or CH4 and/or the UHR-LTF 902 over the entire 240 MHz bandwidth, for example, before being able to decode the data field 909 over the entire 240 MHz bandwidth of the UHR PPDU 900.

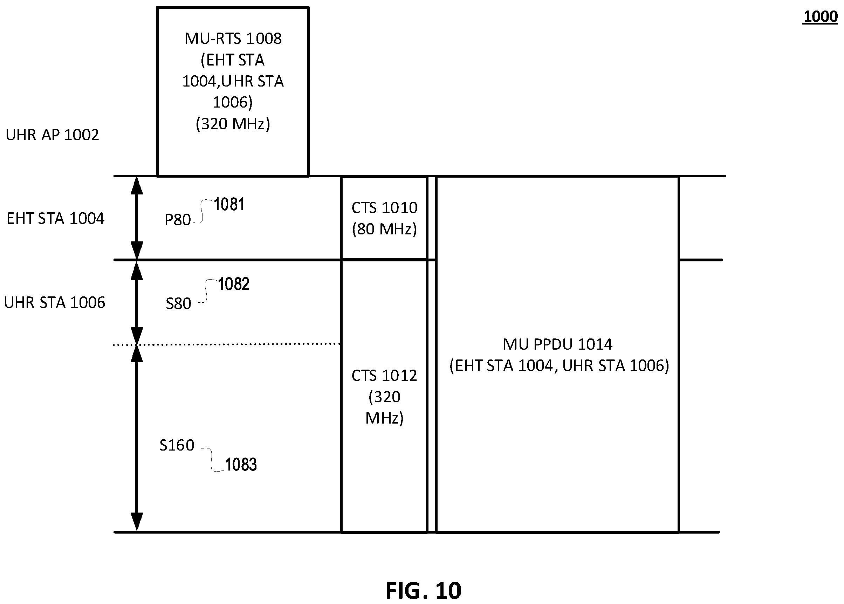

FIG. 10 shows an example multi-user (MU) PPDU transmission procedure. An MU PPDU transmission may be used by an AP to serve multiple STAs. The multiple STAs may be homogeneous or heterogeneous devices. As shown in FIG. 10, for example, a UHR AP 1002 may support a bandwidth of up to 320 MHz or any other value. an EHT STA 1004 may support a bandwidth of up to 160 MHz or any other value. A UHR STA 1006 may support a bandwidth of up to 320 MHz or any other value. For example, the EHT STA 1004 may be configured, without limitation, with a primary 80 MHz channel (e.g., a P80 1081) and a secondary 80 MHz channel (a S80 1082). The UHR STA 1006 may be configured, without limitation, with the P80 1081, the S80 1082 (e.g., as a first secondary 80 MHz), a primary 160 MHz channel (not shown in FIG. 10), and/or a secondary 160 MHz channel (e.g., a S160 1083).

The UHR AP 1002 may send (e.g., transmit) an MU Request to Send (MU-RTS) frame 1008 to the EHT STA 1004 and/or the UHR STA 1006, for example, before performing an MU PPDU transmission to the EHT STA 1004 and/or the UHR STA 1006. The MU-RTS frame 1008 may be sent (e.g., transmitted) over the entire 320 MHz bandwidth in a non- high throughput (non-HT) duplicate PPDU transmission. The PPDU that may be comprised in the MU-RTS frame 1008 may be duplicated over every 20 MHz channel of the 320 MHz bandwidth.

The MU-RTS frame 1008 may request that the EHT STA 1004 responds to the MU-RTS frame 1008 over the P80 1081 and/or that the UHR STA 806 responds to the MU-RTS frame 1008 over the entire 320 MHz channel (e.g., the P80 1081 + the S80 1082 + the S160 1083). The EHT STA 1004 may sent (e.g., transmit) a Clear to Send (CTS) frame 1010 over the P80 1081 in a non-HT duplicate PPDU transmission. The PPDU comprised in the CTS frame 1010 may be duplicated over every 20 MHz channel of the P80 1081. The UHR STA 1006 may send (e.g., transmit) a CTS frame 1012 over the entire 320 MHz (e.g., the P80 1081 + the S80 1082 + the S160 1083) in a non-HT duplicate PPDU transmission. The PPDU comprised in the CTS frame 1012 may be duplicated over every 20 MHz channel of the 320 MHz channel (e.g., the P80 1081 + the S80 1082 + the S160 1083).

Based on receiving the CTS frames 1010 and 1012, the UHR AP 1002 may send (e.g., transmit) an MU PPDU 1014 over the entire 320 MHz bandwidth (e.g., the P80 1081 + the S80 1082 + the S160 1083) to the EHT STA 1004 and the UHR STA 1006.

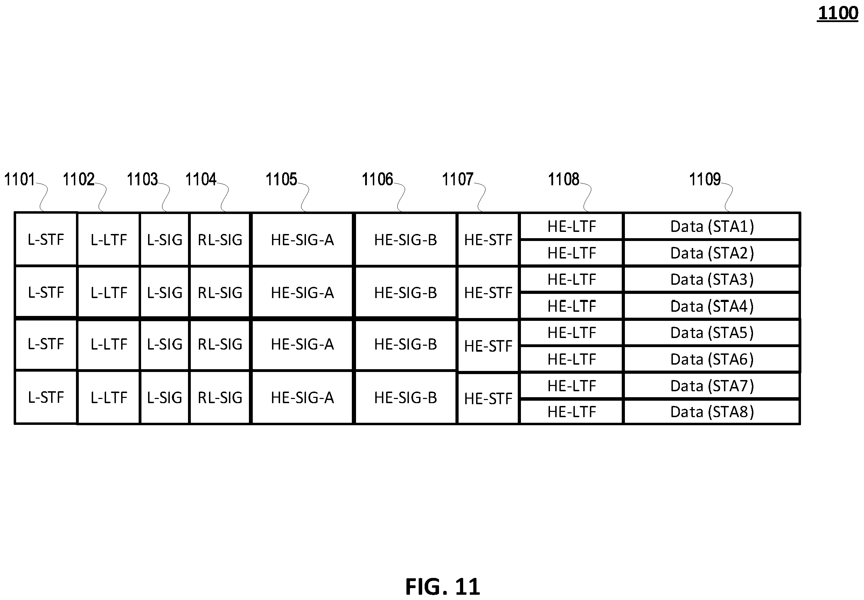

FIG. 11 shows an example MU PDDU. For example, a MU PPDU 1100 may be an HE PPDU. The MU PPDU 1100 may be used by an AP to send (e.g., transmit) simultaneously to multiple STAs using downlink (DL) OFDMA and/or DL MU-MIMO. As shown in FIG. 11, a portion of a PHY header of MU PPDU 1100 may be duplicated over every 20 MHz channel located within a bandwidth of the PPDU. The duplicated PHY portion may contain an L-STF 1101, an L-LTF 1102, an L-SIG 1103, an RL-SIG 1104, an HE-SIG-A 1105, an HE SIG-B 1106, and/or a HE Short Training field (HE-STF) 1107. An HE-LTF of the PHY header may be duplicated according to the number of STAs being served by the MU PPDU 1100. For example, 8 STAs (e.g., STA1 to STA8) may be able to be served by the MU PPDU 1100.

A STA receiving the MU PPDU 1100 may decode the 20 MHz duplicated portion of the MU PPDU 1100 (e.g., over P20). The STA may determine (e.g., learn) the total bandwidth of the MU PPDU 1100 (e.g., 80 MHz) from the HE-SIG-A 1105. The STA may determine (e.g., learn) the RU allocated to it in the MU PPDU 1100 from the HE-SIG-B 1106. Based on the RU allocation, the UHR STA may determine the HE-STF 1107 and/or the HE-LTF(s) 1108 to decode, for example, before being able to decode a data field 1109 over the RU that may be allocated to the STA in the MU PPDU 1100.

In at least some wireless communications, an access point (AP) may send an Aggregate PPDU (A-PPDU) to stations (STAs) such as an EHT STA, a UHR STA, or any other STA. For example, the A-PPDU may contain an ETA PPDU (e.g., for an ETA STA) and/or a UHR PPDU (e.g., for a UHR STA). The AP may send a downlink (DL) announcement frame, for example, prior to sending the A-PPDU. The DL announcement frame may be sent on a primary channel. The DL announcement frame may inform that the UHR STA should switch to a different channel for receiving/decoding the UHR PPDU that may be contained in the A-PPDU. If the DL announcement frame may not be received by the UHR STA, the UHR STA may not switch to the different channel and may fail to receive/decode the UHR PPDU in the A-PPDU. Not knowing that the UHR STA did not switch to the different channel, the AP may send the A-PPDU containing the UHR PPDU. Any errors in the A-PPDU transmission may cause substantial disruptions or deterioration in the reliability of the data being sent.

As described herein, the AP may request a response frame from at least one STA, for example, to confirm whether the at least one STA may have received the DL announcement frame. For example, before sending an A-PPDU, the AP may send a specific frame that may comprise a combination of a trigger frame and a DL announcement frame. The trigger frame may allocate uplink transmission resources for the at least one STA. The DL announcement frame may announce an upcoming DL A-PPDU transmission and/or may associate the at least one STA with a respective channel for the upcoming DL A-PPDU transmission. Based on receiving, from the AP, the specific frame comprising the combination of a trigger frame and a DL announcement frame, the at least one STA may send, to the AP, a trigger-band (TB) PPDU on the respective channel. Based on the receiving the TB PPDU, the AP may send to the at least one STA responding to the specific frame comprising the combination of a trigger frame and a DL announcement frame. For example, if the AP may have not received the TP PPDU from a STA, the AP may remove the STA from the upcoming A-PPDU transmission. By sending the combination of the trigger frame and the DL announcement frame, the AP may be able to select an appropriate destination STA list for the upcoming DL A-PPDU and reduce potential wasted resources in the downlink.

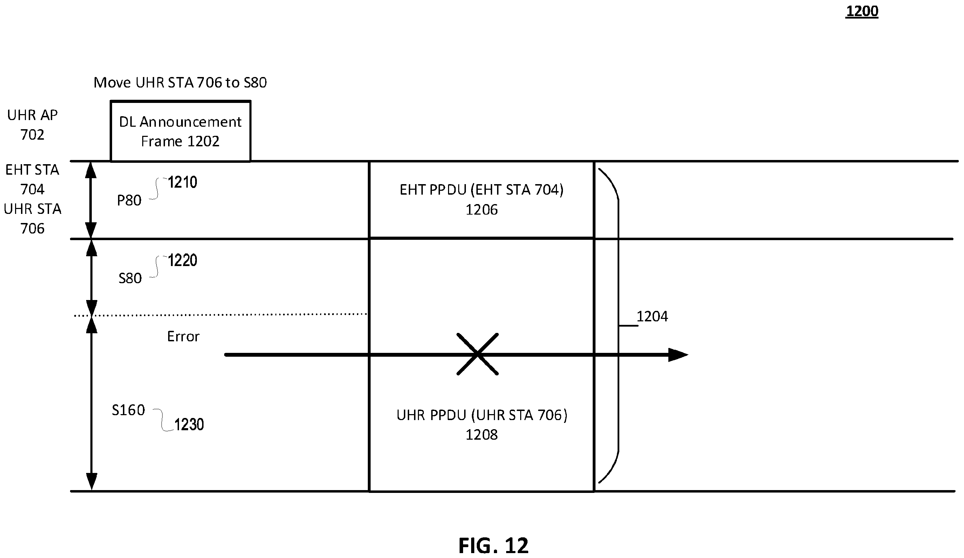

FIG. 12 shows an example problem of an A-PPDU transmission. For example, an EHT STA 704 and/or a UHR STA 706 may be initially configured for communication on (e.g., parked on) a P80 1210. A UHR AP 702 may send (e.g., transmit) a DL announcement frame 1202, for example, before an A-PPDU transmission. The DL announcement frame 1202 may be sent (e.g., transmitted) on a primary 20 MHz (e.g., P20 (not shown in FIG. 12)) that may be located within the P80 1210. The DL announcement frame 1202 may be duplicated on one or more non-primary 20 MHz (S20) channels that may be located within the P80 1210. The DL announcement frame 1202 may request that the UHR STA 706 may move to a S80 1220 for an upcoming A-PPDU transmission.

The UHR STA 706 may fail to receive and/or may fail to decode the DL announcement frame 1202. For example, the UHR STA 706 may remain configured for communication on (e.g., parked on) the P80 1210. Not knowing that the UHR STA 706 did not switch to the S80 1220, the UHR AP 702 may send (e.g., transmit) an A-PPDU 1204. The A-PPDU 1204 may comprise an EHT PPDU 1206 for the EHT STA 704 and/or a UHR PPDU 1208 for the UHR STA 706. The EHT PPDU 1206 may have an 80 MHz bandwidth and/or may be sent (e.g., transmitted) over the P80 1210. The UHR PPDU 1208 may have a 240 MHz bandwidth (e.g., the S80 1220 + the S160 1230) and/or may be sent (e.g., transmitted) over an aggregate channel of the S80 1220 and the S160 1230.

Both the EHT STA 704 and the UHR STA 706 may receive and/or decode the EHT PPDU 1206, for example, if both the EHT STA 704 and the UHR STA 706 may remain configured for communication on (e.g., parked on) the P80 1210. For example, both the EHT STA 704 and the UHR 706 may decode an EHT-SIG field of the EHT PPDU 1206. Based on decoding the EHT-SIG of the EHT PPDU 1206, the EHT STA 704 may determine that the EHT PPDU 1206 may contain an RU allocation for the EHT STA 704 and/or may continue decoding the EHT PPDU 1206, for example, to retrieve the data over the RU allocation. For example, the UHR STA 706 may determine that the EHT PPDU 1206 may not include an RU allocation for the UHR STA 706 and/or may stop decoding the EHT PPDU 1206.

The UHR PPDU 1208 may not be received and/or may not be decoded by the EHT STA 704 and/or the UHR STA 706, for example, as neither the EHT STA 704 nor the UHR STA 706 may be present on the S80 1220. For example, the UHR STA 706 may fail to receive the UHR PPDU 1208 that may be destined to the UHR STA 706. Frequency resources (e.g., 240 MHz (S80 1220 + S160 1230) over the length of the UHR PPDU 1208) that may be used for sending (e.g., transmitting) the UHR PPDU 1208 may be lost.

A target STA of an A-PPDU may be guaranteed to be configured for communication via (e.g., parked on) an allocated channel for the A-PPDU transmission before the A-PPDU transmission may be performed. If such a condition may not be guaranteed, the STA may be removed from the A-PPDU transmission and/or the A-PPDU transmission may be replaced with a single PPDU transmission.

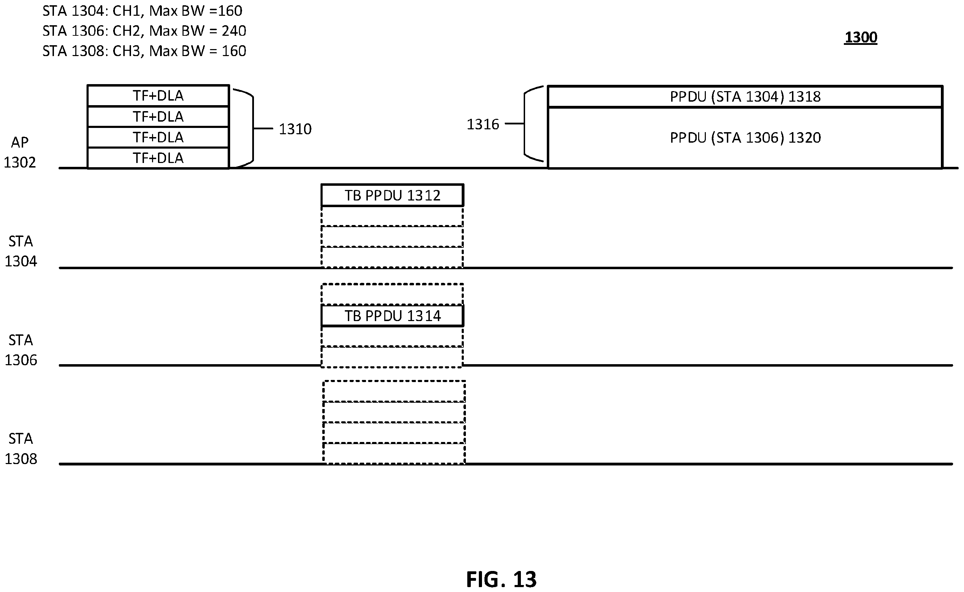

FIG. 13 shows an example of a first A-PPDU transmission. For example, an AP 1302 may be, without limitation, an EHT AP or a UHR AP. A STA 1304 may be, without limitation, an HE STA or an EHT STA. A STA 1306 may be, without limitation, an EHT STA or a UHR STA. A STA 1308 may be, without limitation, an HE STA, an EHT STA, or a UHR STA. For example, the AP 1302 may support a bandwidth of up to 320 MHz or any other value. The STA 1304 may support a bandwidth of up to 160 MHz or any other value. The STA 1306 may support a bandwidth of up to 320 MHz or any other value. The STA 1308 may support a bandwidth of up to 160 MHz or up to 320 MHz. For example, the STA 1304 may be configured, without limitation, with a primary 80 MHz channel (e.g., P80) and/or a secondary 80 MHz channel (e.g., S80). The STA 1306 may be configured, without limitation, with the P80, the S80 (e.g., as a first secondary 80 MHz), a primary 160 MHz channel, and/or a secondary 160 MHz channel (e.g., S160). The STA 1308 may be configured similarly to the STA 1304 and/or the STA 1306.

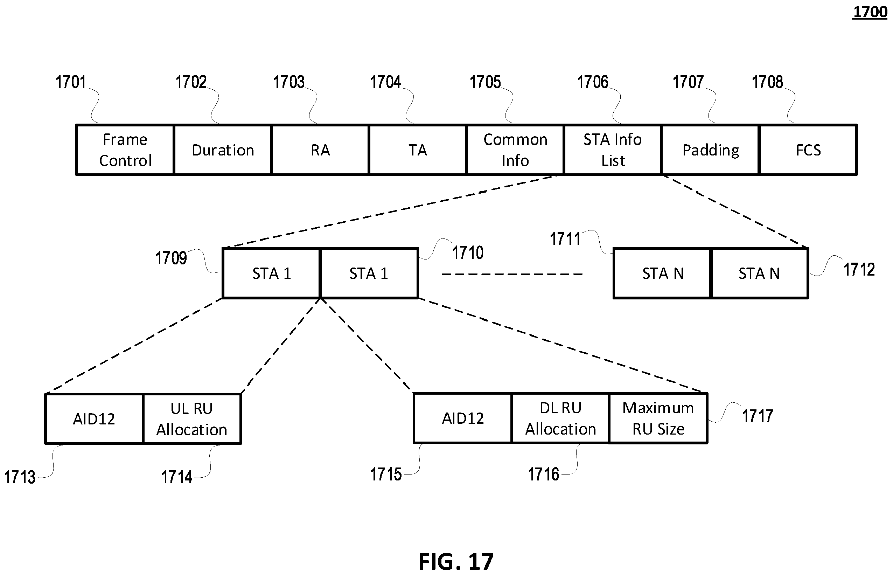

As shown in FIG. 13, the A-PPDU transmission procedure may begin with the AP 1302 sending (e.g., transmitting) a frame 1310. For example, the frame 1310 may be sent (e.g., transmitted) over the entire 320 MHz bandwidth in a non-HT duplicate PPDU transmission. The PPDU comprised in the frame 1310 may be duplicated over every 80 MHz channel of the 320 MHz bandwidth. For example, the frame 1310 may comprise a combination of a trigger frame and a DL announcement frame. The trigger frame may allocate resources for uplink transmission to the STA 1304, the STA 1306, and/or the STA 1308. The DL announcement frame may announce an upcoming DL A-PPDU transmission and/or may associate the STA 1304, the STA 1306, and/or the STA 1308 with respective channels for the upcoming DL A-PPDU transmission. The frame 1310 may be implemented according to a frame 1700 shown in FIG. 17.

FIG. 17 shows an example frame for a first A-PPDU transmission procedure. As shown in FIG. 17, the frame 1700 may contain a Frame Control field 1701, a Duration field 1702, an RA field, 1703 a TA field 1704, a Common Info field 1705, a STA Info List field 1706, and/or an FCS field 1708. The Frame Control field 1701, the Duration field 1702, the RA field 1703, the TA field 1704, the Common Info field 1705, and/or the FCS field 1708 may be as described above with respect to the trigger frame 500 shown in FIG. 5.

The STA Info List field 1706 may contain a list of STA subfields (e.g., a STA 1 1709, a STA 1 1710, ..., a STA N 1711, a STA N 1712). For example, as shown in FIG. 17, the STA Info List field 1706 may contain a pair of STA subfields for each STA allocated by the frame 1700. A first STA subfield (e.g., the STA 1 1709) of the pair of STA subfields (e.g., the STA 1 1709 and the STA 1 1710) may have an identical format to the User Info field 509 as described above with respect to the trigger frame 500. For example, the first STA subfield 1709 may indicate an uplink RU allocation for the STA allocated by the frame 1700.

The second STA subfield (e.g., the STA 1 1710) of the pair of STA subfields (e.g., the STA 1 1709 and the STA 1 1710) may contain an AID12 subfield 1715, an RU Allocation subfield 1716, and a Maximum RU Size subfield 1717. The AID12 subfield 1715 may indicate the AID of the STA being allocated by the frame 1700. The RU Allocation subfield 1716 may indicate a downlink RU allocation for the STA for the upcoming A-PPDU transmission. The downlink RU allocation may indicate a channel with which the STA may be associated for the DL A-PPDU transmission. The channel may correspond to a portion (e.g., first channel part) of the total RU bandwidth allocated to the STA in the DL A-PPDU transmission. The Maximum RU Size subfield 1717 may indicate a maximum RU size that the STA may be allocated in the A-PPDU transmission. The maximum RU size may be greater than or equal to the bandwidth of the channel indicated by the downlink RU allocation.

As described with respect to FIG. 13, the frame 1310 may indicate respective UL RU allocations to the STA 1304, the STA 1306, and/or the STA 1308 for uplink transmission based on (e.g., in response to) the frame 1310. For example, the frame 1310 may indicate a first channel (e.g., CH1) for the STA 1304, a second channel (e.g., CH2) for the STA 1306, and/or a third channel (e.g., CH3) for the STA 1308.

The frame 1310 may indicate the STA 1304 being associated with the first channel (e.g., CH1), the STA 1306 being associated with the second channel (e.g., CH2), and/or the STA 1308 being associated with the third channel (e.g., CH3) for the upcoming DL-A-PPDU. The channels allocated to the STA 1304, the STA 1306, and/or the STA 1308 for the DL A-PPDU transmission may be the same as the channels allocated to the STA 1304, the STA 1306, and/or the STA 1308 for UL transmission based on (e.g., in response to) the frame 1310. The channels allocated to the STA 1304, the STA 1306, and/or the STA 1308 for the DL A-PPDU transmission may not be the same as the channels allocated to the STAs for UL transmission based on (e.g., in response to) the frame 1310.

The frame 1310 may indicate a maximum RU size that each of the STA 1304, the STA 1306, and/or the STA 1308 may be allocated in the DL A-PPDU transmission. For example, the STA 1304 may be served using a maximum RU of 160 MHz. The STA 1306 may be served using a maximum RU of 240 MHz. The STA 1308 may be served using a maximum RU of 160 MHz. As described with respect to FIG. 13, CH1 (e.g., P80) may be a primary channel. CH2 (e.g., S80) may be a first secondary channel. CH3 may correspond to a second secondary 80 MHz channel.

For example, the STA 1304 and STA 1306 may successfully receive the frame 1310, and the STA 1308 may fail to receive or may receive the frame 1310 in error. Based on (e.g., in response to) the frame 1310, the STA 1304 may send (e.g., transmit) a trigger-based (TB) PPDU 1312 on CH1 to the AP 1302. For example, the TB PPDU 1312 may be a High-Efficiency (HE) TB PPDU. Based on (e.g., in response to) the frame 1310, the STA 1306 may send (e.g., transmit) a TB PPDU 1314 on CH2 to the AP 1302. For example, the TB PPDU 1314 may be a UHR TB PPDU. The TB PPDU 1312 and/or the TB PPDU 1314 may contain QoS data or null frame(s). For example, if a STA has no uplink data to send (e.g., transmit) to the AP 1302, the AP may send (e.g., transmit) a QoS null frame for its TB PPDU. The STA 1308 may not respond to the frame 1310, for example, as the STA 1308 may not receive the frame 1310.

The STA 1304, the STA 1306, and/or the STA 1308 may be initially configured for communication on (e.g., parked on) a primary channel, CH1 (e.g., P80). Based on receiving the frame 1310, the STA 1304 and/or the STA 1306 may determine whether a switch to a non-primary channel may be required for the DL A-PPDU transmission. For example, the STA 1304 may be associated with CH1 for the DL A-PPDU transmission in the frame 1310. The STA 1304 may remain configured for communication on (e.g., parked on) CH1. For example, the STA 1306 may be associated with the non-primary channel (e.g., CH2) for the DL A-PPDU transmission. The STA 1306 may switch to the CH2 (e.g., S80), for example, based on receiving the frame 1310.

Based on receiving the TB PPDU 1312 from the STA 1304 and receiving the TB PPDU 1314 from the STA 1306, but not receiving a TB PPDU from the STA 1308, based on (e.g., in response to) the frame 1310, the AP 1302 may select the STA 1304 and the STA 1306 as destination STAs for the DL A-PPDU. For example, the AP 1302 may determine that the STA 1304 may be served over the primary channel (e.g., CH1) in the DL A-PPDU transmission. The AP 1302 may determine that the STA 1306 may be served over at least the first secondary channel (e.g., CH2), for example, as the STA 1308 may not be included in the DL A-PPDU transmission. RUs above the first secondary channel (e.g., CH2) in frequency may also be allocated to the STA 1306, for example, as the STA 1306 may support a bandwidth up to 320 MHz in the DL A-PPDU.

The AP 1302 may send (e.g., transmit) an A-PPDU 1316 that may comprise a PPDU 1318 and/or a PPDU 1320. The PPDU 1318 may be an EHT PPDU, for example, if the STA 1304 may be an EHT STA. The PPDU 1318 may be an HE PPDU, for example, if the STA 1304 may be an HE STA. The PPDU 1320 may be a UHR PPDU, for example, if the STA 1306 may be a UHR STA. The PPDU 1320 may be an EHT PPDU, for example, if the STA 1306 may be an EHT STA. For example, the PPDU 1318 may have an 80 MHz bandwidth and/or may be sent (e.g., transmitted) over the primary channel (e.g., CH1). The PPDU 1320 may have a 240 MHz bandwidth and/or may be sent (e.g., transmitted) over an aggregate channel of the first secondary channel (e.g., CH2), the second secondary 80 MHz channel (e.g., CH3), and a third secondary 80 MHz channel (e.g., CH4). The STA 1306 may return to the primary channel (e.g., CH1), for example, based on receiving the PPDU 1320.

The combination of the trigger frame and the DL announcement frame may schedule uplink transmissions from the STAs to the AP and/or setup an upcoming DL A-PPDU transmission. The procedure may leverage the uplink transmissions based on (e.g., in response to) the combination of the trigger frame and the DL announcement frame, for example, to select an appropriate destination list for the DL A-PPDU and/or reduce potential wasted resources in the downlink.

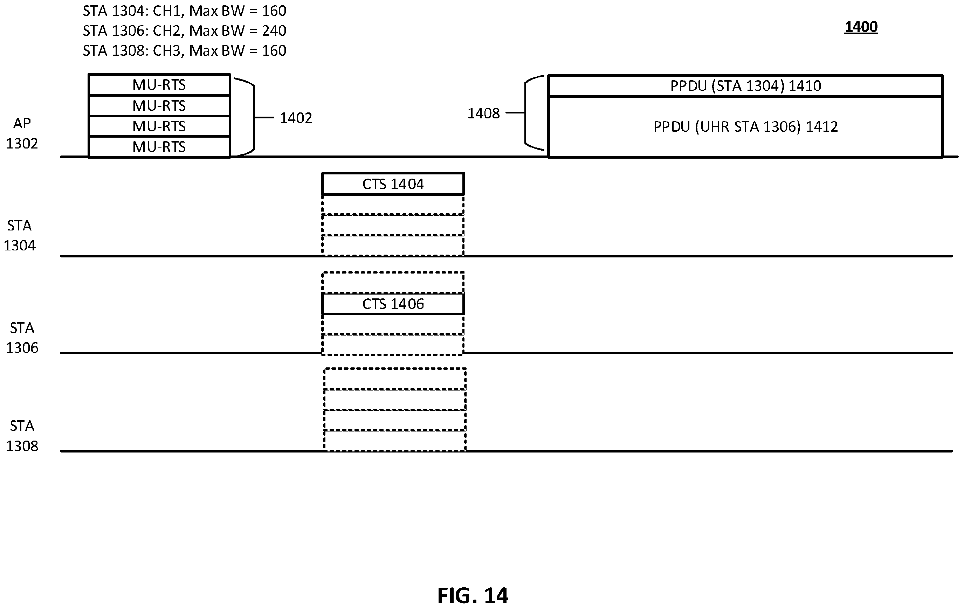

FIG. 14 shows an example of a second A-PPDU transmission procedure. As shown in FIG. 14, the A-PPDU transmission procedure may begin with the AP 1302 sending (e.g., transmitting) a frame 1402. For example, the frame 1402 may be sent (e.g., transmitted) over the entire 320 MHz bandwidth in a non-HT duplicate PPDU transmission. The PPDU comprised in the frame 1402 may be duplicated over every 80 MHz channel of the 320 MHz bandwidth.

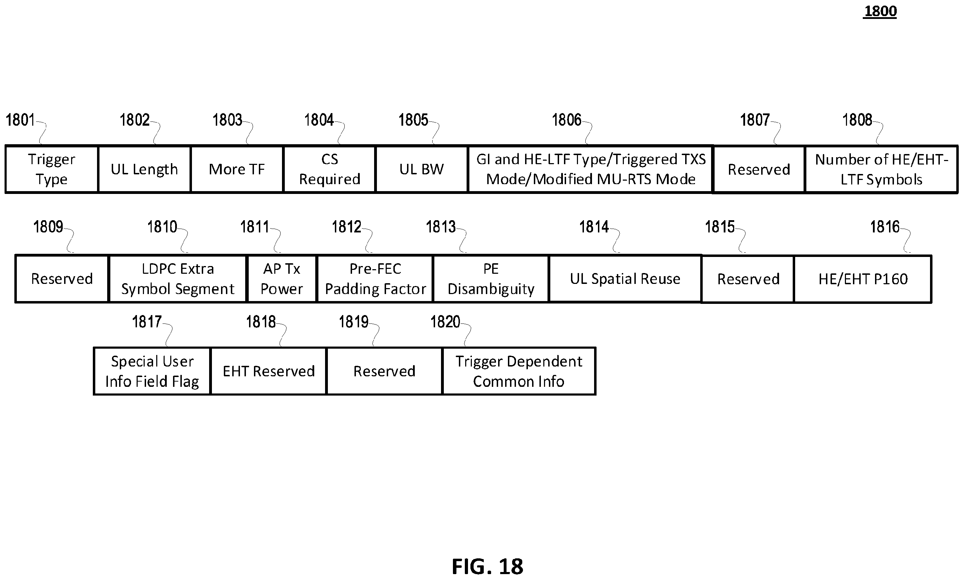

The frame 1402 may comprise a modified MU-RTS frame. The modified MU-RTS frame may announce an upcoming DL A-PPDU transmission and/or may associate the STA 1304, the STA 1306, and/or the STA 1308 with respective channels for the DL A-PPDU transmission. The STA 1304, the STA 1306, and/or the STA 1308 indicated in the modified MU-RTS frame may be configured to respond to the modified MU-RTS frame with a CTS frame. The frame 1402 may be implemented, for example, according to the frame 1700 shown in FIG. 17 with a Common Info field 1705 configured according to a Common Info field 1800 shown in FIG. 18.

FIG. 18 shows an example Common Info field for a second A-PPDU transmission procedure. As shown in FIG. 18, the Common Info field 1800 may contain a Trigger Type subfield 1801, a UL Length subfield 1802, a More TF subfield 1803, a CS required subfield 1804, a UL BW subfield 1805, a GI and a HE-LTF Type/Triggered TXS Mode/Modified MU-RTS Mode subfield 1806, a Reserved 1807, a Number of HE/EHT-LTF Symbols subfield 1808, a Reserved 1809, a LDPC Extra Symbol Segment subfield 1810, an AP Tx Power subfield 1811, a Pre-FEC Padding Factor subfield 1812, a PE Disambiguity subfield 1813, a UL Spatial Reuse subfield 1814, a Reserved 1815, a HE/EHT P160 1816, a Special User Info Field Flag subfield 1817, an EHT Reserved 1818, a Reserved 1819, and/or a Trigger Dependent Common Info field 1820. The Trigger Type field 1801, the UL Length field 1802, the More TF field 1803, the CS required field 1804, the LTL BW field 1805, the Reserved 1807, the Number of HE/EHT-LTF Symbols 1808, the Reserved 1809, the LDPC Extra Symbol Segment 1810, the AP Tx Power 1811, the Pre-FEC Padding Factor 1812, the PE Disambiguity 1813, the UL Spatial Reuse 1814, the Reserved 1815, the HE/EHT P160 1816, the Special User Info Field Flag 1817, the EHT Reserved 1818, the Reserved 1819, and/or the Trigger Dependent Common Info field 1820 may have the same content and interpretation as corresponding fields of an EHT variant Common Info field defined in the IEEE 802.11be version 2.2 draft amendment. The HE-LTF Type/Triggered TXS Mode/Modified MU-RTS Mode field 1806 may signal whether an MU-RTS Trigger Type Trigger frame may be a regular Trigger frame variant, a Triggered TXOP Sharing (TXS) variant, or a Modified MU-RTS variant as in the frame 1402 as described with respect to FIG. 14.

As described with respect to FIG. 14, the frame 1402 may indicate respective UL RU allocations to the STA 1304, the STA 1306, and/or the STA 1308 for a CTS transmission based on (e.g., in response to) the frame 1310. For example, the frame 1402 may indicate a first channel (e.g., CH1) for the STA 1304, a second channel (e.g., CH2) for the STA 1306, and a third channel (e.g., CH3) for the STA 1308.

The frame 1402 may indicate the STA 1304 being associated with a first channel (e.g., CH1), the STA 1306 being associated with a second channel (e.g., CH2), and the STA 1308 being associated with a third channel (e.g., CH3) for the upcoming DL-A PPDU. The channels allocated to the STA 1304, the STA 1306, and/or the STA 1308 for the DL A-PPDU transmission may be the same as the channels allocated to the STAs for the CTS transmission based on (e.g., in response to) the frame 1402. The channels allocated to the STA 1304, the STA 1306, and/or the STA 1308 for the DL A-PPDU transmission may be different from the channels allocated to the STAs for the CTS transmission based on (e.g., in response to) the frame 1402.

The frame 1402 may indicate a maximum RU size that each of the STA 1304, the STA 1306, and/or the STA 1308 may be allocated in the DL A-PPDU transmission. For example, the STA 1304 may be served using a maximum RU of 160 MHz. The STA 1306 may be served using a maximum RU of 240 MHz. The STA 1308 may be served using a maximum RU of 160 MHz. CH1 (e.g., P80) may be a primary channel. CH2 (S80) may be a secondary channel. CH3 may correspond to a second secondary 80 MHz channel.

The STA 1304 and/or the STA 1306 may successfully receive the frame 1402, and the STA 1308 may fail to receive or may receive the frame 1402 in error. Based on (e.g., in response to) the frame 1402, the STA 1304 may send (e.g., transmit) a CTS frame 1404 on CH1 to the AP 1302. For example, based on (e.g., in response to) the frame 1402, the STA 1306 may send (e.g., transmit) a CTS frame 1406 on CH2 to the AP 1302. The STA 1306 may not send (e.g., transmit) the CTS frame 1406 in the primary channel (e.g., CH1), for example, since the frame 1402 may be a modified MU-RTS frame that may be signaled by the Common Info field 1800. For example, as described with respect to FIG. 10, the UHR STA 1006 may send (e.g., transmit) CTS frames in the P80 1081 in addition to CTS frame transmission in the S80 1082 and the S160 1083 channels on which the STA 1006 may have an RU allocation. The STA 1308 may not respond to the frame 1402, for example, as the STA 1308 may not receive frame 1402.

The STA 1304, the STA 1306, and/or the STA 1308 may be initially configured for communication on (e.g., parked on) a primary channel (e.g., CH1 (P80)). Based on receiving the frame 1402, the STA 1304 and/or the STA 1306 may determine whether a switch to a non-primary channel may be required for the DL A-PPDU transmission. For example, the STA 1304 may be associated with CH1 for the DL A-PPDU transmission in frame 1402. The STA 1304 may remain configured for communication on (e.g., parked on) CH1. For example, the STA 1306 may be associated with the non-primary channel (e.g., CH2 (S80)) for the DL A-PPDU transmission. The STA 1306 may switch to CH2, for example, based on receiving the frame 1402.

Based on receiving the CTS frame 1404 from the STA 1304 and receiving the CTS frame 1406 from the STA 1306, but not receiving a CTS from the STA 1308, based on (e.g., in response to) the frame 1402, the AP 1302 may select the STA 1304 and the STA 1306 as destination STAs for the DL A-PPDU. For example, the AP 1302 may determine that the STA 1304 may be served over the primary channel (e.g., CH1) in the DL A-PPDU transmission. The STA 1306 may be served over at least the first secondary channel (e.g., CH2), for example, as the STA 1308 may not be included in the DL A-PPDU transmission. RUs above the first secondary channel (e.g., CH2) in frequency may also be allocated to the STA 1306, for example, as the STA 1306 may support a bandwidth up to 320 MHz in the DL A-PPDU.

The AP 1302 may send (e.g., transmit) an A-PPDU 1408 comprising a PPDU 1410 and a PPDU 1412. The PPDU 1410 may be an EHT PPDU, for example, if the STA 1304 may be an EHT STA. The PPDU 1410 may be an HE PPDU, for example, if the STA 1304 may be an HE STA. The PPDU 1412 may be a UHR PPDU, for example, if the STA 1306 may be a UHR STA. The PPDU 1412 may be an EHT PPDU, for example, if the STA 1306 may be an EHT STA. For example, the PPDU 1410 may have an 80 MHz bandwidth and/or may be sent (e.g., transmitted) over CH1. The PPDU 1412 may have a 240 MHz bandwidth and/or may be sent (e.g., transmitted) over an aggregate channel of CH2, CH3, and/or CH4 (e.g., a third secondary 80 MHz channel). The STA 1306 may return to CH1, for example, based on receiving PPDU 1412.

An advantage of the A-PPDU transmission procedure as described with respect to FIG. 14 may be that an upcoming DL A-PPDU transmission may be setup with reduced overhead due to the fact that CTS frames may be very short in length. The AP may use the CTS response frames, for example, to select an appropriate destination list for the DL A-PPDU and/or to reduce potential wasted resources in the downlink.

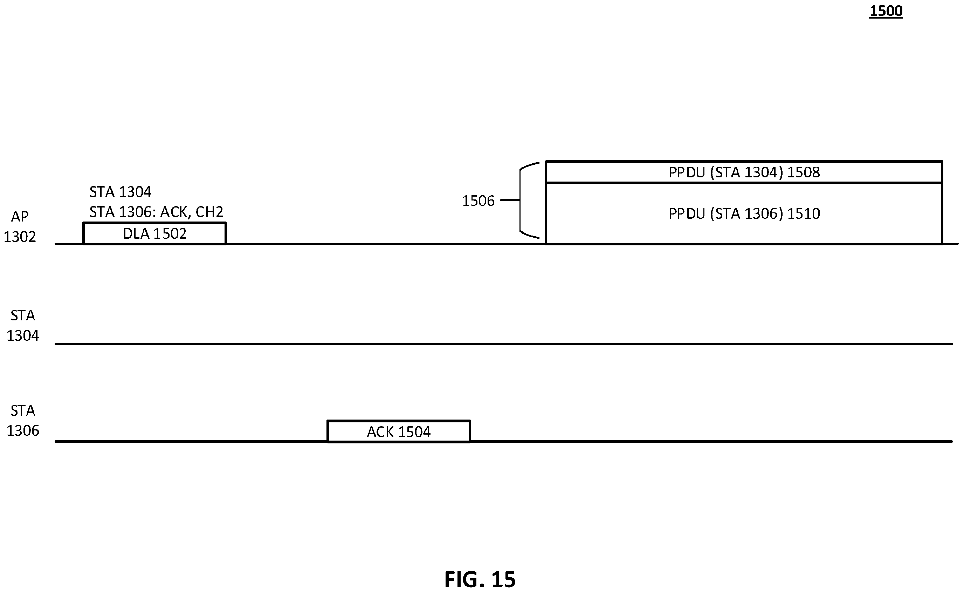

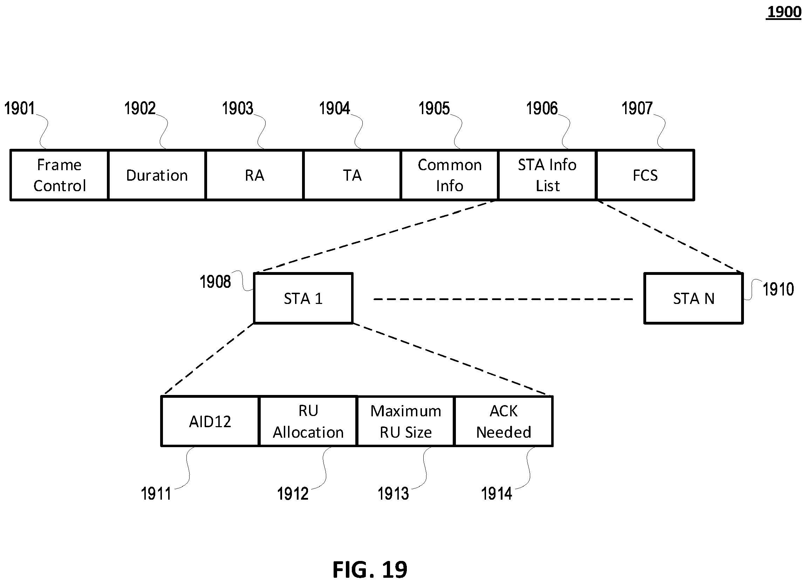

FIG. 15 shows an example of a third A-PPDU transmission procedure. For example, the STA 1304 may be an HE STA or an EHT STA. The STA 1306 may be a UHR STA. As shown in FIG. 15, the A-PPDU transmission procedure may begin with AP 1302 sending (e.g., transmitting) a frame 1502. The frame 1502 may be a downlink announcement (DLA) frame. For example, the frame 1502 may be sent (e.g., transmitted) over a primary channel (e.g., CH1). CH1 may correspond to a primary 80 MHz channel (e.g., P80). The frame 1502 may announce an upcoming DL A-PPDU transmission and/or may associate the STA 1306 with a non-primary channel (e.g., CH2) for the DL A-PPDU transmission. The CH2 may correspond to a first secondary 80 MHz channel (e.g., S80). The frame 1502 may be implemented, for example, according to a frame 1900 shown in FIG. 19.

FIG. 19 shows an example frame for a third A-PPDU transmission procedure. As shown in FIG. 19, the frame 1900 may contain a Frame Control field 1901, a Duration field 1902, an RA field 1903, a TA field 1904, a Common Info field 1905, a STA Info List field 1906, and/or an FCS field 1907. The Frame Control field 1901, the Duration field 1902, the RA field 1903, the TA field 1904, the Common Info field 1905, and the FCS field 1907 may be as described above with respect to the trigger frame 500 shown in FIG. 5.

The STA Info List field 1906 may include a list of STA subfields (e.g., a STA 1 1908, ..., a STA N 1910). As shown in FIG. 19, the STA Info List field 1906 may contain a STA subfield for each STA allocated by the frame 1900. The STA subfield (e.g., the STA 1 1908) may contain an AID12 subfield 1911, an RU Allocation subfield 1912, a Maximum RU Size subfield 1913, and/or an ACK needed subfield 1914. The AID12 subfield 1911 may indicate the AID of the STA being allocated by the frame 1900. The RU Allocation subfield 1912 may indicate a downlink RU allocation for the STA for the upcoming A-PPDU transmission. The downlink RU allocation may indicate a channel with which the STA may be associated for the DL A-PPDU transmission. The channel may correspond to a portion (e.g., first channel part) of the total RU bandwidth allocated to the STA in the DL A-PPDU transmission. The Maximum RU Size subfield 1913 may indicate a maximum RU size that the STA may be allocated in the A-PPDU transmission. The maximum RU size may be greater than or equal to the bandwidth of the channel indicated by the downlink RU allocation. The ACK needed subfield 1914 may indicate whether an immediate acknowledgment may be requested from the STA based on (e.g., in response to) the frame 1900 (e.g., an immediate acknowledgment may refer to an acknowledgment sent by the STA a SIFS after receiving the frame 1900).

As described with respect to FIG. 15, the frame 1502 may indicate that an immediate acknowledgment may be requested from the STA 1306 based on (e.g., in response to) the frame 1502. The frame 1502 may indicate a maximum RU size that the STA 1306 may be allocated in the DL A-PPDU transmission.

The STA 1304 may receive the frame 1502. The STA 1304 may not be configured to decode frame 1502, for example, if the STA 1304 may be an HE STA or an EHT STA. The transmission of the frame 1502 may be transparent to the STA 1304. For example, as a UHR STA, the STA 1306 may receive and/or decode the frame 1502. Based on decoding the frame 1502, the STA 1306 may determine that the AP 1302 may request an immediate acknowledgment based on (e.g., in response to) the frame 1502. The STA 1306 may send (e.g., transmit) an ACK frame 1504 to the AP 1302. The ACK frame 1504 may be sent (e.g., transmitted) on the same channel (e.g., CH1) on which the frame 1502 may be received. For example, the STA 1304 may decode the frame 1502 and/or may determine that the frame 1502 may not request an immediate acknowledgment from the STA 1304. The STA 1304 may not respond to the frame 1502. For example, the STA 1304 and the STA 1306 may be initially configured for communication on (e.g., parked on) the primary channel (e.g., CH1). Based on receiving the frame 1502, the STA 1306 may determine whether a switch to a non-primary channel may be required for the DL A-PPDU transmission. The STA 1306 may be associated with the non-primary channel (e.g., CH2) for the DL A-PPDU transmission. The STA 1306 may switch to CH2, for example, based on receiving frame 1502.

Based on receiving the ACK frame 1504 from the STA 1306 based on (e.g., in response to) the frame 1502, the AP 1302 may select the STA 1304 and the STA 1306 as destination STAs for the DL A-PPDU. For example, the AP 1302 may determine that the STA 1304 may be served over the primary channel (e.g., CH1) in the DL A-PPDU transmission based on the STA 1304 being configured for communication on (e.g., parked on) the primary channel (e.g., CH1) by default. The AP 1302 may determine that the STA 1306 may be served over at least the first secondary channel (e.g., CH2) based on receiving the ACK frame 1504 from the STA 1306.

The AP 1302 may send (e.g., transmit) an A-PPDU 1506 comprising a PPDU 1508 and a PPDU 1510. The PPDU 1508 may be an EHT PPDU, for example, if the STA 1304 is an EHT STA. The PPDU 1508 may be an HE PPDU, for example, if the STA 1304 is an HE PPDU. The PPDU 1510 may be a UHR PPDU, for example, if the STA 1306 is a UHR STA. The PPDU 1510 may be an EHT PPDU, for example, if the STA 1306 is an EHT STA. For example, the PPDU 1508 may have an 80 MHz bandwidth and/or may be sent (e.g., transmitted) over CH1. For example, the PPDU 1510 may have a 240 MHz bandwidth and/or may be sent (e.g., transmitted) over an aggregate channel of CH2, CH3 (a second secondary 80 MHz channel), and CH4 (a third secondary 80 MHz channel). The STA 1306 may return to CH1, for example, based on receiving the PPDU 1510.

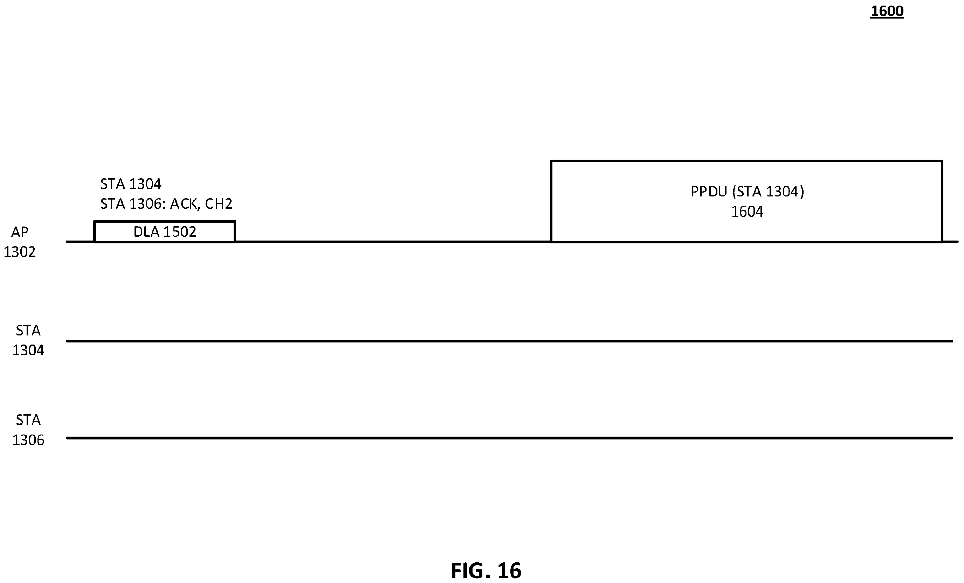

FIG. 16 shows an example 1600 of a third A-PPDU transmission procedure. For example, the STA 1304 may be an HE STA or an EHT STA. The STA 1306 may be a UHR STA. As shown in FIG. 16, the A-PPDU transmission procedure may begin with the AP 1302 sending (e.g., transmitting) frame 1502. The frame 1502 may be as described above with respect to FIG. 15. The frame 1502 may announce an upcoming DL A-PPDU transmission and/or may associate the STA 1306 with a non-primary channel (e.g., CH2) for the DL A-PPDU transmission. The frame 1502 may also indicate that an immediate acknowledgment may be requested from the STA 1306 based on (e.g., in response to) the frame 1502. For example, the frame 1502 may be sent (e.g., transmitted) over a primary channel (e.g., CH1). The CH1 may correspond to a primary 80 MHz channel (e.g., P80).

The STA 1306 may not send (e.g., transmit) an ACK frame based on (e.g., in response to) receiving the frame 1502. For example, the STA 1306 may not receive or may receive frame 1502 in error. Based on not receiving the ACK frame from the STA 1306 based on (e.g., in response to) the frame 1502, the AP 1302 may select the STA 1304 only as a destination STA for the upcoming DL transmission. The STA 1302 may send (e.g., transmit) a PPDU 1604 to the STA 1304 for the DL transmission. Determining (e.g., knowing) that the STA 1304 may be configured for communication on (e.g., parked on) the primary channel (e.g., CH1), and/or based on the fact that no other STA may be served in the DL transmission, the AP 1302 may determine that the STA 1304 may be served over at least the primary channel (e.g., CH1). For example, the AP 1302 may send (e.g., transmit) the PPDU 1604 over the entire 320 MHz bandwidth (assuming that the STA 1304 may support a 320 MHz bandwidth).

An advantage of the A-PPDU transmission procedure shown in FIG. 15 and FIG. 16 may be that a DL A-PPDU transmission may be setup with very low overhead. The announcement frame from the AP may be sent (e.g., transmitted) on a single channel. A single acknowledgment frame may be needed in return. The AP may use the ACK frame to determine whether a DL A-PPDU may be appropriate and/or reduce potential wasted resources in the downlink.

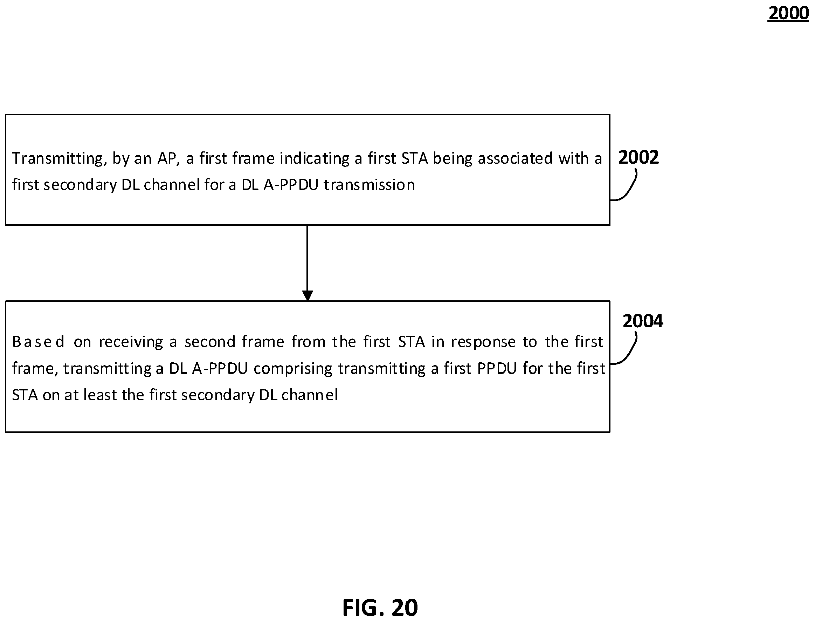

FIG. 20 shows an example process for an access point. For example, an AP may be an EHT AP or a UHR AP. As shown in FIG. 20, step 2004 may include sending (e.g., transmitting), by the AP, a first frame indicating a first STA being associated with a first secondary DL channel for a DL A-PPDU transmission. The first STA may be associated with the AP. The first STA may operate by default on a primary DL channel (e.g., may be configured for communication on (e.g., parked on) the primary DL channel according to default operation). The first STA may be a UHR STA or an EHT STA. Sending (e.g., transmitting) the first frame may comprise sending (e.g., transmitting) the first frame in duplicate on the primary channel and the first secondary channel (e.g., using non-HT duplicate mode).

The first frame may comprise a trigger frame. The trigger frame may indicate an uplink resource allocation for the first STA. The first frame may comprise a modified MU-RTS frame. The modified MU-RTS frame may indicate a downlink resource allocation for the first STA for the DL A-PPDU transmission. The first frame may comprise a DL announcement frame. The DL announcement frame may indicate a downlink resource allocation for the first STA for the DL A-PPDU transmission. The DL announcement frame may or may not request an immediate acknowledgment from the first STA. The first frame may comprise a combination of a trigger frame and a DL announcement frame. The combined frame may indicate an uplink resource allocation for the first STA and a downlink resource allocation for the first STA for the DL A-PPDU transmission.

The first frame may comprise a first STA Info field for the first STA. The first STA Info field may comprise a User Info field comprising an uplink resource allocation for the first STA. The first frame may further comprise a second STA Info field for the first STA. The second STA Info field may comprise a downlink resource allocation for the first STA. The first frame may include an indication of scheduling of the DL A-PPDU. The first frame may further indicate a maximum DL bandwidth for the first STA for the DL A-PPDU transmission.

Step 2004 may include sending (e.g., transmitting) a DL A-PPDU comprising sending (e.g., transmitting) a first PPDU for the first STA on at least the first secondary DL channel, based on receiving a second frame from the first STA in response to the first frame. The first frame may indicate a first uplink channel for the first STA to send (e.g., transmit) the second frame. The second frame may comprise a trigger-based (TB) PPDU, for example, if the first frame may comprise a trigger frame. The second frame may comprise a CTS frame, for example, if the first frame may comprise a modified MU-RTS. The second frame may comprise an ACK frame, for example, if the first frame may comprise a DL announcement frame.

The first PPDU may be a UHR PPDU or an EHT PPDU. The DL A-PPDU may have a bandwidth of 80, 160, or 320 MHz. The first PPDU within the DL A-PPDU may have a bandwidth of 40, 80, 160, 240, or 320 MHz. The first frame may further indicate a second STA being associated with a primary DL channel for the DL A-PPDU transmission. The second STA may be associated with the AP. The second STA may operate by default on the primary DL channel (e.g., may be configured for communication on (e.g., parked on) the primary DL channel according to default operation). The second STA may be an EHT STA or an HE STA. Sending (e.g., transmitting) the DL A-PPDU may further comprise sending (e.g., transmitting) a second PPDU for the second STA on the primary DL channel. The second PPDU may be an HE PPDU or an EHT PPDU.

Process 2000 may further comprise receiving a third frame, based on (e.g., in response to) the first frame, from the second STA. Based on not receiving the second frame from the first STA, sending (e.g., transmitting) a third PPDU for the second STA on at least the primary DL channel. The third PPDU may be sent (e.g., transmitted) over the primary DL channel and at least the first secondary DL channel.

The first frame may comprise a DL announcement frame that may request an immediate acknowledgment from the first STA. Based on not receiving the immediate acknowledgment from the first STA in response to the DL announcement frame, process 2000 may further comprise sending (e.g., transmitting) a fourth PPDU for the second STA on at least the primary DL channel.

The first frame may further indicate a third STA being associated with a second secondary DL channel for the DL A-PPDU transmission. Based on not receiving a fourth frame from the third STA in response to the first frame, sending (e.g., transmitting) the DL A-PPDU may comprise sending (e.g., transmitting) the first PPDU on a combined channel comprising the first secondary DL channel and the second secondary DL channel.

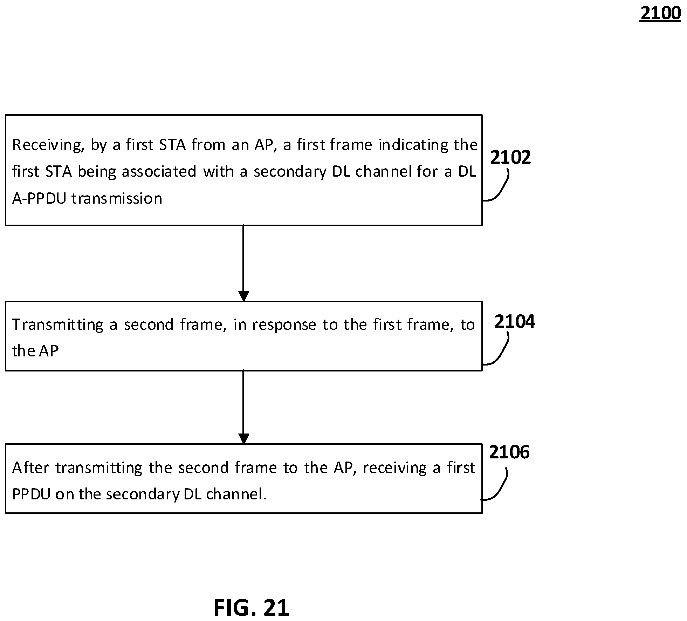

FIG. 21 shows an example for a station. For example, the first STA may be an EHT STA or a UHR STA. As shown in FIG. 21, step 2102 may include receiving, by the first STA from an AP, a first frame indicating the first STA being associated with a secondary DL channel for a DL A-PPDU transmission. The first STA may be associated with the AP. The AP may be an EHT AP or a UHR AP.

The first frame may comprise a trigger frame. The trigger frame may indicate an uplink resource allocation for the first STA. The first frame may comprise a modified MU-RTS frame. The modified MU-RTS frame may indicate a downlink resource allocation for the first STA for the DL A-PPDU transmission. For example, the first frame may comprise a DL announcement frame. The DL announcement frame may indicate a downlink resource allocation for the first STA for the DL A-PPDU transmission. The DL announcement frame may or may not request an immediate acknowledgment from the first STA. For example, the first frame may comprise a combination of a trigger frame and a DL announcement frame. The combined frame may indicate an uplink resource allocation for the first STA and a downlink resource allocation for the first STA for the DL A-PPDU transmission. For example, the first frame may comprise a first STA Info field for the first STA. The first STA Info field may comprise a User Info field comprising an uplink resource allocation for the first STA. The first frame may further comprise a second STA Info field for the first STA. The second STA Info field may comprise a downlink resource allocation for the first STA. The first frame may include an indication of scheduling of the DL A-PPDU. The first frame further indicates a maximum DL bandwidth for the first STA for the DL A-PPDU transmission.

Step 2104 may include sending (e.g., transmitting) a second frame, based on (e.g., in response to) the first frame, to the AP. For example, the first frame may indicate a first uplink channel for the first STA to send (e.g., transmit) the second frame. The second frame may comprise a TB PPDU, for example if the first frame may comprise a trigger frame. The second frame may comprise a CTS frame, for example, if the first frame may comprise a modified MU-RTS frame. The second frame may comprise an ACK frame, for example, if the first frame may comprise a DL announcement frame.

Step 2206 may include receiving a first PPDU on the secondary DL channel, after sending (e.g., transmitting) the second frame to the AP. The first PPDU may be a UHR PPDU or an EHT PPDU. The DL A-PPDU may have a bandwidth of 80, 160, or 320 MHz. The first PPDU within the DL A-PPDU may have a bandwidth of 40, 80, 160, 240, or 320 MHz.

The first frame may further indicate a second STA being associated with a primary DL channel for the DL A-PPDU transmission. The second STA may be associated with the AP. The second STA may operate by default on the primary DL channel (e.g., may be configured for communication on (e.g., parked on) the primary DL channel according to default operation). The second STA may be an EHT STA or an HE STA.

The first STA may operate by default on a primary DL channel (e.g., may be configured for communication on (e.g., parked on) the primary DL channel according to default operation). An operating frequency of the first STA may be switched from the primary DL channel to the secondary DL channel, for example, after sending (e.g., transmitting) the second frame. The operating frequency of the first STA may be switched from the secondary DL channel to the primary DL channel after receiving the first PPDU.

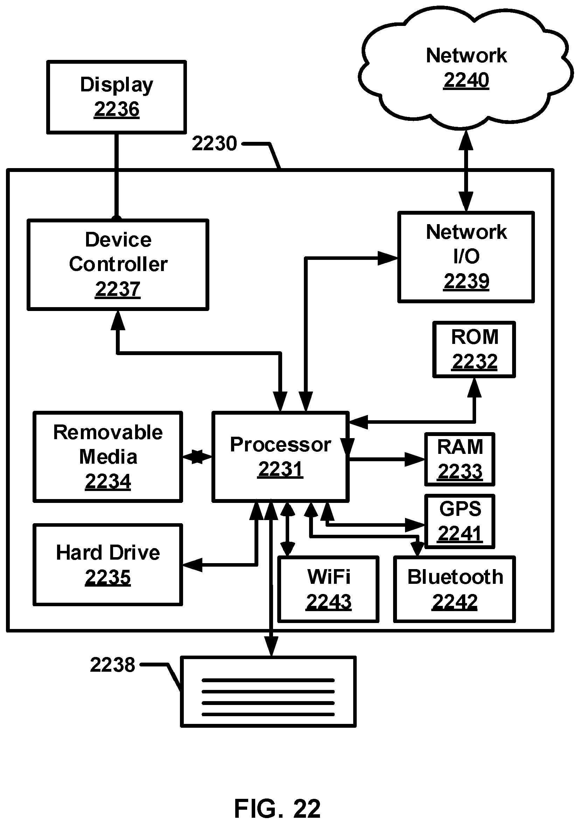

FIG. 22 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 704, 706, 1004, 1006, 1304, 1306, 1308), an AP (e.g., 104-1, 104-2, 702, 1002, 1302), communication devices (e.g., 210, 260), and/or any computing and/or communication device described herein. The computing device 2230 may comprise one or more processors 2231, which may execute instructions stored in the random-access memory (RAM) 2233, the removable media 2234 (such as a Universal Serial Bus (USB) drive, compact disk (CD) or digital versatile disk (DVD), or floppy disk drive), or any other desired storage medium. Instructions may also be stored in an attached (or internal) hard drive 2235. The computing device 2230 may also comprise a security processor (not shown), which may execute instructions of one or more computer programs to monitor the processes executing on the processor 2231 and any process that requests access to any hardware and/or software components of the computing device 2230 (e.g., ROM 2232, RAM 2233, the removable media 2234, the hard drive 2235, the device controller 2237, a network interface 2239, a GPS 2241, a Bluetooth interface 2242, a WiFi interface 2243, etc.). The computing device 2230 may comprise one or more output devices, such as the display 2236 (e.g., a screen, a display device, a monitor, a television, etc.), and may comprise one or more output device controllers 2237, such as a video processor. There may also be one or more user input devices 2238, such as a remote control, keyboard, mouse, touch screen, microphone, etc. The computing device 2230 may also comprise one or more network interfaces, such as a network interface 2239, which may be a wired interface, a wireless interface, or a combination of the two. The network interface 2239 may provide an interface for the computing device 2230 to communicate with a network 2240 (e.g., a RAN, or any other network). The network interface 2239 may comprise a modem (e.g., a cable modem), and the external network 2240 may comprise communication links, an external network, an in-home network, a provider's wireless, coaxial, fiber, or hybrid fiber/coaxial distribution system (e.g., a DOCSIS network), or any other desired network. Additionally, the computing device 2230 may comprise a location-detecting device, such as a global positioning system (GPS) microprocessor 2241, which may be configured to receive and process global positioning signals and determine, with possible assistance from an external server and antenna, a geographic position of the computing device 2230.

The example in FIG. 22 may be a hardware configuration, although the components shown may be implemented as software as well. Modifications may be made to add, remove, combine, divide, etc. components of the computing device 2230 as desired. Additionally, the components may be implemented using basic computing devices and components, and the same components (e.g., processor 2231, ROM storage 2232, display 2236, etc.) may be used to implement any of the other computing devices and components described herein. For example, the various components described herein may be implemented using computing devices having components such as a processor executing computer-executable instructions stored on a computer-readable medium, as shown in FIG. 22. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising transmitting, by an access point and to a first station (STA), a first frame indicating the first STA is associated with a secondary channel for aggregate physical layer protocol data unit (A-PPDU) transmission.

Clause 2. The method of clause 1, further comprising receiving, from the first STA, a second frame indicating receipt of the first frame.

Clause 3. The method of any one of clauses 1-2, further comprising transmitting, based on the second frame and via at least the secondary channel, an A-PPDU comprising a first PPDU for the first STA.

Clause 4. The method of any one of clauses 1-3, wherein the first frame further indicates a second STA is associated with a primary channel for the A-PPDU transmission.

Clause 5. The method of any one of clauses 1-4, wherein the first PPDU has a bandwidth of at least one of 40, 80, 160, 240, or 320 MHz.

Clause 6. The method of any one of clauses 1-5, wherein the A-PPDU further comprises a second PPDU for transmission, via a primary channel, to the second STA.

Clause 7. The method of any one of clauses 1-6, wherein the first frame comprises a trigger frame and a downlink announcement frame.

Clause 8. The method of any one of clauses 1-7, wherein the second frame comprises a trigger-based (TB) PPDU.

Clause 9. The method of any one of clauses 1-8, wherein the first PPDU is an Ultra High Reliability (UHR) PPDU.

Clause 10. The method of any one of clauses 1-9, wherein the second PPDU is a High Efficiency (HE) or an Extremely High Throughout (EHT) PPDU.

Clause 11. The method of any one of clauses 1-10, wherein the A-PPDU has a bandwidth of at least one of 40, 80, 160, 240, or 320 MHz.

Clause 12. The method of any one of clauses 1-11, wherein the first frame comprises an indication of scheduling the A-PPDU.

Clause 13. The method of any one of clauses 1-12, wherein the access point is an Ultra High Reliability (UHR) access point.

Clause 14. The method of any one of clauses 1-13, wherein the first STA is an Ultra High Reliability (UHR) STA.

Clause 15. The method of any one of clauses 1-14, wherein the second STA is a High Efficiency (HE) or an Extremely High Throughout (EHT) STA.

Clause 16. A computing device comprising: one or more processors; and memory storing instructions that, when executed by the one or more processors, cause the computing device to perform: the method of any one of clauses 1 to 15.

Clause 17. A system comprising: an access point configured to perform the method of any one of clauses 1 to 15; and at least one station configured to send, to the access point, at least one frame that is based on the first frame.

Clause 18. A computer-readable medium storing instructions that, when executed, cause performance of: the method of any one of clauses 1 to 15.

Clause 19. A method comprising transmitting, by an access point and to a first station (STA), a first frame indicating: a first STA is associated with a secondary downlink (DL) channel for DL aggregate physical layer protocol data unit (DL A-PPDU) transmission; and a second STA is associated with a primary DL channel for DL A-PPDU transmission.

Clause 20. The method of clause 19, further comprising receiving, from the first STA, a second frame indicating receipt of the first frame.

Clause 21. The method of any one of clauses 19-20, further comprising, based on the second frame and via at least the secondary DL channel, transmitting a DL A-PPDU comprising a first PPDU for the first STA on the secondary DL channel; and a second PPDU for the second STA on the primary DL channel.

Clause 22. The method of any one of clauses 19-21, further comprising receiving, from the second STA, a third frame that is based on the first frame.

Clause 23. The method of any one of clauses 19-22, further comprising: based on not receiving the second frame from the first STA, transmitting a third PPDU for the second STA on at least the primary DL channel.

Clause 24. The method of any one of clauses 19-23, wherein the first frame further indicates a third STA being associated with a second secondary DL channel for the DL A-PPDU transmission.

Clause 25. The method of any one of clauses 19-24, wherein transmitting the DL A-PPDU comprises transmitting the first PPDU on a combined channel comprising the first secondary DL channel and the second secondary DL channel based on not receiving a fourth frame from the third STA in response to the first frame.

Clause 26. The method of any one of clauses 19-25, wherein the first frame comprises an indication of scheduling of the DL A-PPDU.

Clause 27. The method of any one of clauses 19-26, wherein the first frame further indicates a maximum DL bandwidth for the first STA for the DL A-PPDU transmission.

Clause 28. The method of any one of clauses 19-27, wherein the first frame further indicates a third STA is associated with a second secondary DL channel for DL A-PPDU transmission.

Clause 29. The method of any one of clauses 19-28, wherein the first frame comprises a multi-user request-to-send (MU-RTS) frame.

Clause 30. The method of any one of clauses 19-29, wherein the second frame comprises a clear-to-send (CTS) frame.

Clause 31. The method of any one of clauses 19-30, wherein the second frame comprises an acknowledgment (ACK) frame.

Clause 32. The method of any one of clauses 19-31, wherein the DL announcement frame requests an immediate acknowledgment from the first STA.

Clause 33. The method of any one of clauses 19-32, wherein the DL announcement does not request an immediate acknowledgment from the second STA.

Clause 34. The method of any one of clauses 19-33, further comprising: based on not receiving the acknowledgment from the first STA in response to the DL announcement frame, transmitting a fourth PPDU for the second STA on at least the primary DL channel.

Clause 35. A computing device comprising: one or more processors; and memory storing instructions that, when executed by the one or more processors, cause the computing device to perform: the method of any one of clauses 19 to 34.

Clause 36. A system comprising: an access point configured to perform the method of any one of clauses 19 to 34; and at least one station configured to send, to the access point, at least one frame that is based on the first frame.

Clause 37. A computer-readable medium storing instructions that, when executed, cause performance of: the method of any one of clause 19 to 34.

Clause 38. A method comprising receiving, by a first station (STA) and from an access point, a first frame indicating the first STA is associated with a secondary channel for aggregate physical layer protocol data unit (A-PPDU) transmission.

Clause 39. The method of clause 38, further comprising transmitting, to the access point, a second frame indicating receipt of the first frame.

Clause 40. The method of any one of clauses 38-39 further comprising receiving, via at least the secondary channel, an A-PPDU comprising a first PPDU for the first STA.

Clause 41. The method of any one of clauses 38-40, wherein the first frame further indicates a second STA is associated with a primary channel for A-PPDU transmission.

Clause 42. The method of any one of clauses 38-41, wherein the A-PPDU further comprises a second PPDU for transmission, via the primary channel, to the second STA.

Clause 43. The method of any one of clauses 38-42, wherein the first frame comprises a trigger frame and a downlink announcement frame.

Clause 44. The method of any one of clauses 38-43, wherein the first frame comprises a first STA Info field and a second STA Info field for the first STA.

Clause 45. The method of any one of clauses 38-44, wherein the first STA Info field comprises a User Info field comprises an uplink resource allocation for the first STA.

Clause 46. The method of any one of clauses 38-45, wherein the second STA Info field comprises a DL resource allocation for the first STA.

Clause 47. The method of any one of clauses 38-46, wherein the second frame comprises a trigger-based (TB) PPDU.

Clause 48. The method of any one of clauses 38-47, further comprising transmitting the first frame in duplicate on the primary channel and the secondary channel.

Clause 49. The method of any one of clauses 38-48, wherein the first frame indicates a first uplink channel for the first STA to transmit the second frame.

Clause 50. The method of any one of clauses 38-49, wherein the second STA is a High Efficiency (HE) or an Extremely High Throughput (EHT) STA.

Clause 51. The method of any one of clauses 38-50, wherein the first frame comprises a first STA Info field and a second STA Info field for the first STA.

Clause 52. The method of any one of clauses 38-51, wherein the second STA Info field comprises a downlink resource allocation for the first STA.

Clause 53. The method of any one of clauses 38-52, wherein the A-PPDU has a bandwidth of at least one of 40, 80, 160, 240, or 320 MHz.

Clause 54. The method of any one of clauses 38-53, wherein the first PPDU has a bandwidth of at least one of 40, 80, 160, 240, or 320 MHz.

Clause 55. A computing device comprising: one or more processors; and memory storing instructions that, when executed by the one or more processors, cause the computing device to perform: the method of any one of clauses 38 to 54.

Clause 56. A system comprising: an access point configured to perform the method of any one of clauses 38 to 54; and at least one station configured to send, to the access point, at least one frame that is based on the first frame.

Clause 57. A computer-readable medium storing instructions that, when executed, cause performance of: the method of any one of clauses 38 to 54.

An access point (AP) may perform a method comprising multiple operations. The AP may send (e.g., transmit), to a first station (STA), a first frame that may indicate the first STA may be associated with a secondary channel for aggregate physical layer protocol data unit (A-PPDU) transmission. The AP may receive, from the first STA, a second frame that may indicate receipt of the first frame. The AP may send (e.g., transmit), for example, based on the second channel, via at least the secondary channel, an A-PPDU that may comprise a first PPDU for the first STA. The first frame may indicate a second STA that may be associated with a primary channel for the A-PPDU transmission. The first PPDU may have a bandwidth of at least one of 40, 80, 160, 240, or 320 MHz. The A-PPDU may comprise a second PPDU for transmission, via a primary channel, to the second STA. The first frame may comprise a trigger frame and a downlink announcement frame. The second frame may comprise a trigger-based (TB) PPDU. The first PPDU may be an Ultra High Reliability (UHR) PPDU. The second PPDU may be a High Efficiency (HE) or an Extremely High Throughput (EHT) PPDU. The A-PPDU may have a bandwidth of at least one of 40, 80, 160, 240, or 320 MHz. The first frame may comprise an indication of scheduling the A-PPDU. The AP may be an Ultra High Reliability (UHR) access point. The first STA may be an Ultra High Reliability (UHR) STA. The second STA may be a High Efficiency (HE) or an Extremely High Throughput (EHT) STA. A computing device may comprise one or more processors and memory storing instructions that, when executed by the one or more processors, may cause the computing device to perform any one or more of the operations described herein. A system may comprise an access point (AP) configured to perform any one or more of the operations described herein, and at least one station (STA) may be configured to send at least one message to the AP. A computer-readable medium may store instructions that, when executed, cause performance of any one or more of the operations described herein.

An access point (AP) may perform a method comprising multiple operations. The AP may send (e.g., transmit), to a first station (STA), a first frame that may indicate a first STA may be associated with a secondary downlink (DL) channel for DL aggregate physical layer protocol data unit (DL A-PPDU) transmission; and a second STA may be associated with a primary DL channel for DL A-PPDU transmission. The AP may receive, from the first STA, a second frame that may indicate receipt of the first frame. The AP may send (e.g., transmit), for example, based on the second frame, via at least the secondary channel, a DL A-PPDU may comprise a first PPDU for the first STA on the secondary DL channel and a second PPDU for the second STA on the primary DL channel. The AP may receive, from the second STA, a third frame that may be based on the first frame. The AP may send (e.g., transmit), for example, based on not receiving the second frame from the first STA, a third PPDU for the second STA on at least the primary DL channel. The first frame may indicate a third STA that may be associated with a second secondary DL channel for the DL A-PPDU transmission. The AP may send (e.g., transmit) the first PPDU on a combined channel comprising the first secondary DL channel and the second secondary DL channel, for example, based on not receiving a fourth frame from the third STA based on (e.g., in response to) the first frame. The first frame may comprise an indication of scheduling of the DL A-PPDU. The first frame may indicate a maximum DL bandwidth for the first STA for the DL A-PPDU transmission. The first frame may indicate a third STA may be associated with a second secondary DL channel for DL A-PPDU transmission. The first frame may comprise a multi-user request-to-send (MU-RTS) frame. The second frame may comprise a clear-to-send (CTS) frame. The second frame may comprise an acknowledgment (ACK) frame. The DL announcement frame may request an immediate acknowledgment from the first STA. The DL announcement may not request an immediate acknowledgment from the second STA. The AP may send (e.g., transmit), for example, based on not receiving the acknowledgment from the first STA based on (e.g., in response to) the DL announcement frame, a fourth PPDU for the second STA on at least the primary DL channel. A computing device may comprise one or more processors and memory storing instructions that, when executed by the one or more processors, may cause the computing device to perform any one or more of the operations described herein. A system may comprise an access point (AP) configured to perform any one or more of the operations described herein, and at least one station (STA) may be configured to send at least one message to the AP. A computer-readable medium may store instructions that, when executed, cause performance of any one or more of the operations described herein.

A station (STA) may perform a method comprising multiple operations. A first STA may receive receiving, from an access point, a first frame that may indicate the first STA may be associated with a secondary channel for aggregate physical layer protocol data unit (A-PPDU) transmission. The first STA may send (e.g., transmit) to the access point, a second frame that may indicate receipt of the first frame. The first STA may receive, via at least the secondary channel, an A-PPDU that may comprise a first PPDU for the first STA. The first frame may indicate a second STA that may be associated with a primary channel for A-PPDU transmission. The A-PPDU may comprise a second PPDU for transmission, via the primary channel, to the second STA. The first frame may comprise a trigger frame and a downlink announcement frame. The first frame may comprise a first STA Info field and a second STA Info field for the first STA. The first STA Info field may comprise a User Info field that may comprise an uplink resource allocation for the first STA. The second STA Info field may comprise a DL resource allocation for the first STA. The second frame may comprise a trigger-based (TB) PPDU. The first STA may send (e.g., transmit) the first frame in duplicate on the primary channel and the secondary channel. The first frame may indicate a first uplink channel for the first STA, for example, to send (e.g., transmit) the second frame. The second STA may be a High Efficiency (HE) or an Extremely High Throughout (EHT) STA. The first frame may comprise a first STA Info field and a second STA Info field for the first STA. The second STA Info field may comprise a downlink resource allocation for the first STA. The A-PPDU may have a bandwidth of at least one of 40, 80, 160, 240, or 320 MHz. The first PPDU may have a bandwidth of at least one of 40, 80, 160, 240, or 320 MHz. A computing device may comprise one or more processors and memory storing instructions that, when executed by the one or more processors, may cause the computing device to perform any one or more of the operations described herein. A system may comprise an access point (AP) configured to perform any one or more of the operations described herein, and at least one station (STA) may be configured to send at least one message to the AP. A computer-readable medium may store instructions that, when executed, cause performance of any one or more of the operations described herein.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or Lab VIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   transmitting, by an access point and to a first station (STA), a first frame indicating the first STA is associated with a secondary channel for aggregate physical layer protocol data unit (A-PPDU) transmission;
   receiving, from the first STA, a second frame indicating receipt of the first frame; and
   transmitting, based on the second frame and via at least the secondary channel, an A-PPDU comprising a first PPDU for the first STA.

2. The method of claim 1, wherein the first frame further indicates a second STA is associated with a primary channel for the A-PPDU transmission.

3. The method of any one of claims 1 to 2, wherein the first PPDU has a bandwidth of at least one of 40, 80, 160, 240, or 320 MHz.

4. The method of any one of claims 1 to 3, wherein the A-PPDU further comprises a second PPDU for transmission, via a primary channel, to the second STA.

5. The method of any one of claims 1 to 4, wherein the first frame comprises a trigger frame and a downlink announcement frame.

6. The method of any one of claims 1 to 5, wherein the second frame comprises a trigger-based (TB) PPDU.

7. The method of any one of claims 1 to 6, wherein the first PPDU is an Ultra High Reliability (UHR) PPDU.

8. The method of any one of claims 1 to 7, wherein the second PPDU is a High Efficiency (HE) or an Extremely High Throughout (EHT) PPDU.

9. The method of any one of claims 1 to 8, wherein the A-PPDU has a bandwidth of at least one of 40, 80, 160, 240, or 320 MHz.

10. The method of any one of claims 1 to 9, wherein the first frame comprises an indication of scheduling the A-PPDU.

11. The method of any one of claims 1 to 10, wherein the access point is an Ultra High Reliability (UHR) access point.

12. The method of any one of claims 1 to 11, wherein the first STA is an Ultra High Reliability (UHR) STA.

13. A computing device comprising: one or more processors; and memory storing instructions that, when executed by the one or more processors, cause the computing device to perform:
the method of any one of claims 1 to 12.

14. A system comprising:

   an access point configured to perform the method of any one of claims 1 to 12; and
   at least one station configured to send, to the access point, at least one frame that is based on the first frame.

15. A computer-readable medium storing instructions that, when executed, cause performance of:
the method of any one of claims 1 to 12.

FIG. 1

EP 4 383 637 A1

FIG. 2

| Bits | 2 | 2 | 4 | 1 | 1 | 1 | 1 | 1 | 1 | 1 | 1 |
|---|---|---|---|---|---|---|---|---|---|---|---|
| | Protocol Version | Type | Subtype | To DS | From DS | More Fragments | Retry | Power Management | More Data | Protected Frame | +HTC |

| Octets | 2 | 2 | 6 | 0 or 6 | 0 or 6 | 0 or 6 | 0 or 2 | 0 or 4 | variable | 4 |
|---|---|---|---|---|---|---|---|---|---|---|
| | Frame Control | Duration /ID | Address 1 | Address 2 | Address 3 | Sequence Control | QoS Control | HT Control | Frame Body | FCS |

MAC Header

**FIG. 3**

EP 4 383 637 A1

FIG. 4

EP 4 383 637 A1

**500**

| Frame Control | Duration | RA | TA | Common Info | User List Info | Padding Info | FCS |
|---|---|---|---|---|---|---|---|

501 502 503 504 505 506 507 508

Octets: 2    2    6    6    8 or more    variable    variable    4

| User Info Field | User Info Field | — | User Info Field |
|---|---|---|---|

509    510    511

B0 B11    B12 B19    B20    B21 B24    B25    B26 B31    B32 B38    B39

| AID12 | RU Allocation | UL FEC Coding Type | UL HE-MCS | UL DCM | SS Allocation/RA-RU Information | UL Target Receive Power | Reserved | Trigger Dependent User Info |
|---|---|---|---|---|---|---|---|---|

Bits: 12    8    1    4    1    6    7    1    variable

512    513    514    515    516    517    518    519    520

**FIG. 5**

EP 4 383 637 A1

601

| | |
|---|---|
| PPDU-1 | 80 MHz |
| PPDU-2 | 80 MHz |
| PPDU-3 | 160 MHz |

602

603

**FIG. 6**

Move UHR STA 706 to S80

UHR AP
702

| DL Announcement Frame 708 | | |

EHT STA
704
UHR STA
706

P80 ⌇710

| | EHT PPDU (EHT STA 704) 712 | |

After Reception of DLA, UHR STA 706 moves to S80

S80 ⌇
⌇720

After Reception of UHR PPDU, UHR STA 706 returns to P80

⌐ 710

UHR PPDU (UHR STA 706)
714

S160 ⌇730

**FIG. 7**

EP 4 383 637 A1

800

| | 801 | 802 | 803 | 804 | 805 | 806 | 807 | 808 | 809 |

810

850

CH1
80 MHz
(P80)

BW = 80 MHz

| | 801 | 802 | 803 | 804 | 805 | 806 | 807 | 808 | 809 |
|---|---|---|---|---|---|---|---|---|---|
| Primary 20 MHz (P20) | L-STF | L-LTF | L-SIG | RL-SIG | U-SIG | EHT-SIG | EHT-STF | EHT-LTF | Data |
| Secondary 20 MHz (S20) | L-STF | L-LTF | L-SIG | RL-SIG | U-SIG | EHT-SIG | EHT-STF | | |
| Secondary 20 MHz (S20) | L-STF | L-LTF | L-SIG | RL-SIG | U-SIG | EHT-SIG | EHT-STF | | |
| Secondary 20 MHz (S20) | L-STF | L-LTF | L-SIG | RL-SIG | U-SIG | EHT-SIG | EHT-STF | | |

820     840

830

RU = CH1 (P80)

**FIG. 8**

EP 4 383 637 A1

**FIG. 9**

EP 4 383 637 A1

EP 4 383 637 A1

1000

UHR AP 1002

MU-RTS 1008
(EHT STA
1004,UHR STA
1006)
(320 MHz)

EHT STA 1004

P80 ⌐1081

CTS 1010
(80 MHz)

UHR STA 1006

S80 ⌐1082

S160 ⌐1083

CTS 1012
(320
MHz)

MU PPDU 1014
(EHT STA 1004, UHR STA 1006)

**FIG. 10**

**1100**

| 1101 | 1102 | 1103 | 1104 | 1105 | 1106 | 1107 | 1108 | 1109 |
|------|------|------|------|------|------|------|------|------|
| L-STF | L-LTF | L-SIG | RL-SIG | HE-SIG-A | HE-SIG-B | HE-STF | HE-LTF | Data (STA1) |
| | | | | | | | HE-LTF | Data (STA2) |
| L-STF | L-LTF | L-SIG | RL-SIG | HE-SIG-A | HE-SIG-B | HE-STF | HE-LTF | Data (STA3) |
| | | | | | | | HE-LTF | Data (STA4) |
| L-STF | L-LTF | L-SIG | RL-SIG | HE-SIG-A | HE-SIG-B | HE-STF | HE-LTF | Data (STA5) |
| | | | | | | | HE-LTF | Data (STA6) |
| L-STF | L-LTF | L-SIG | RL-SIG | HE-SIG-A | HE-SIG-B | HE-STF | HE-LTF | Data (STA7) |
| | | | | | | | HE-LTF | Data (STA8) |

**FIG. 11**

EP 4 383 637 A1

1200

Move UHR STA 706 to S80

UHR AP
702

DL Announcement
Frame 1202

EHT STA
704
UHR STA
706

P80 — 1210

EHT PPDU (EHT STA 704)
1206

S80 — 1220

1204

Error

⨯

S160 — 1230

UHR PPDU (UHR STA 706)
1208

FIG. 12

EP 4 383 637 A1

STA 1304: CH1, Max BW =160

STA 1306: CH2, Max BW = 240

STA 1308: CH3, Max BW = 160

1300

AP 1302

| TF+DLA |
| TF+DLA |
| TF+DLA |
| TF+DLA |

1310

1316

| PPDU (STA 1304) 1318 |
| PPDU (STA 1306) 1320 |

STA 1304

TB PPDU 1312

STA 1306

TB PPDU 1314

STA 1308

FIG. 13

EP 4 383 637 A1

**1400**

STA 1304: CH1, Max BW = 160
STA 1306: CH2, Max BW = 240
STA 1308: CH3, Max BW = 160

AP
1302

| MU-RTS |
| MU-RTS |
| MU-RTS |
| MU-RTS |

1402

1408

| PPDU (STA 1304) 1410 |
| PPDU (UHR STA 1306) 1412 |

STA
1304

CTS 1404

STA
1306

CTS 1406

STA
1308

**FIG. 14**

EP 4 383 637 A1

1500

AP
1302

STA 1304
STA 1306: ACK, CH2

| DLA 1502 |

1506

| PPDU (STA 1304) 1508 |
| PPDU (STA 1306) 1510 |

STA
1304

STA
1306

| ACK 1504 |

**FIG. 15**

EP 4 383 637 A1

STA 1304
STA 1306: ACK, CH2

PPDU (STA 1304)
1604

AP
1302

DLA 1502

STA
1304

STA
1306

**FIG. 16**

**FIG. 17**

EP 4 383 637 A1

**1800**

| Trigger Type | UL Length | More TF | CS Required | UL BW | GI and HE-LTF Type/Triggered TXS Mode/Modified MU-RTS Mode | Reserved | Number of HE/EHT-LTF Symbols |
|---|---|---|---|---|---|---|---|
| 1801 | 1802 | 1803 | 1804 | 1805 | 1806 | 1807 | 1808 |

| Reserved | LDPC Extra Symbol Segment | AP Tx Power | Pre-FEC Padding Factor | PE Disambiguity | UL Spatial Reuse | Reserved | HE/EHT P160 |
|---|---|---|---|---|---|---|---|
| 1809 | 1810 | 1811 | 1812 | 1813 | 1814 | 1815 | 1816 |

| Special User Info Field Flag | EHT Reserved | Reserved | Trigger Dependent Common Info |
|---|---|---|---|
| 1817 | 1818 | 1819 | 1820 |

**FIG. 18**

EP 4 383 637 A1

| 1901 | 1902 | 1903 | 1904 | 1905 | 1906 | 1907 |
|------|------|------|------|------|------|------|
| Frame Control | Duration | RA | TA | Common Info | STA Info List | FCS |

1908 STA 1 — — — — — — — — — — — STA N 1910

| AID12 | RU Allocation | Maximum RU Size | ACK Needed |
|-------|---------------|-----------------|------------|
| 1911 | 1912 | 1913 | 1914 |

**FIG. 19**

EP 4 383 637 A1

Transmitting, by an AP, a first frame indicating a first STA being associated with a first secondary DL channel for a DL A-PPDU transmission **2002**

Based on receiving a second frame from the first STA in response to the first frame, transmitting a DL A-PPDU comprising transmitting a first PPDU for the first STA on at least the first secondary DL channel **2004**

**FIG. 20**

2100

Receiving, by a first STA from an AP, a first frame indicating the first STA being associated with a secondary DL channel for a DL A-PPDU transmission — 2102

Transmitting a second frame, in response to the first frame, to the AP — 2104

After transmitting the second frame to the AP, receiving a first PPDU on the secondary DL channel. — 2106

**FIG. 21**

EP 4 383 637 A1

**FIG. 22**

**EUROPEAN SEARCH REPORT**

Application Number

EP 23 21 3688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/346176 A1 (JANG INSUN [KR] ET AL) 27 October 2022 (2022-10-27) * page 25 – page 42 * ----- | 1-15 | INV. H04L5/00 H04W84/00 H04W72/23 H04W84/12 |
| | | | TECHNICAL FIELDS SEARCHED (IPC) H04L H04W H04B |

The present search report has been drawn up for all claims

| Place of search | Date of completion of the search | Examiner |
|---|---|---|
| The Hague | 29 April 2024 | Gökceli, Selahattin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 3688

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | Publication date | Patent family member(s) | Publication date |
|---|---|---|---|
| US 2022346176 A1 | 27-10-2022 | US 2022346176 A1 | 27-10-2022 |
| | | WO 2021049817 A1 | 18-03-2021 |

EPO FORM P0459

For more details about this annex : see Official Journal of the European Patent Office, No. 12/82

**REFERENCES CITED IN THE DESCRIPTION**

**Patent documents cited in the description**

- US 63385638